# EUROPEAN PATENT APPLICATION

(11) **EP 3 188 567 A1**
(43) Date of publication of application: **05.07.2017**
(21) Application number: 14900513.4
(22) Date of filing: 25.08.2014
(51) Int. Cl.: H04W 76/02, H04W 92/18

(54) **WIRELESS COMMUNICATION SYSTEM, BASE STATION, TERMINAL, AND COMMUNICATION METHOD**

(71) Applicant: Fujitsu Limited, Kawasaki-shi, Kanagawa 211-8588 (JP)
(72) Inventor: SUDA, Kenji, Kawasaki-shi Kanagawa 211-8588 (JP); YANO, Tetsuya, Kawasaki-shi Kanagawa 211-8588 (JP); TANAKA, Yoshinori, Kawasaki-shi Kanagawa 211-8588 (JP)
(74) Representative: Fenlon, Christine Lesley
(86) International application number: PCT/JP2014/072205
(87) International publication number: WO 2016/030953

(57) **Abstract**

A UE (101) wirelessly connects to an eNB (111) of company A. A UE (102) wirelessly connects to an eNB (112) of company D. At least one of the eNB (111) and the eNB (112) transmits broadcast information that indicates a predetermined bandwidth that is included in a radio frequency bandwidth assigned to company A and that can be used in direct communication between the UE (101) and the UE (102). The UE (102) uses the predetermined bandwidth and performs the direct communication with the UE (101), based on the transmitted broadcast information.

## Description

### TECHNICAL FIELD

The present invention relates to a wireless communications system, a base station, a terminal, and a communications method.

### BACKGROUND ART

Under the 3rd Generation Partnership Project (3GPP), various types of paths in data communication between devices are being studied (for example, refer to Non-patent Literature 1). Further, Device to Device (D2D) communication of direct communication between terminals without passing through a base station is known.

Non-patent Literature 1: "Study on enhancements for Infrastructure based data Communication Between Devices", 3GPP TR 22.807, year: 2014

### DISCLOSURE OF INVENTION

### PROBLEM TO BE SOLVED BY THE INVENTION

Nonetheless, with the traditional technique above, it is difficult for terminals of differing operators to exchange information and therefore, in some instances, direct communication cannot be performed.

According to one aspect, one object of the present invention is to provide a wireless communications system, a base station, a terminal, and a communications method that enable direct communication between terminals of differing operators.

### MEANS FOR SOLVING PROBLEM

To solve the problems above and achieve an object, according to one aspect of the present invention, a wireless communications system, a base station, a terminal, and a communications method are proposed that include a first base station of a first operator, a first terminal that wirelessly connects to the first base station, a second base station of a second operator different from the first operator, and a second terminal that wirelessly connects to the second base station, where at least one of the first base station and the second base station, transmit broadcast information that indicates a predetermined bandwidth that is included in a radio frequency bandwidth assigned to the first operator and that can be used in direct communication between the first terminal and the second terminal, and second terminal uses the predetermined bandwidth and performs the direct communication with the first terminal, based on the broadcast information.

### EFFECT OF THE INVENTION

According to one aspect of the present invention, an effect is achieved in that direct communication between terminals of differing operators becomes possible.

### BRIEF DESCRIPTION OF DRAWINGS

FIG. 1 is a diagram depicting an example of a wireless communications system according to a first embodiment;
FIG. 2 is a diagram depicting an example of bandwidth assigned to operators;
FIG. 3 is a sequence diagram depicting an example of operation the wireless communications system according to the first embodiment;
FIG. 4A is a diagram depicting an example of an eNB;
FIG. 4B is a diagram depicting an example of signal flow in the eNB depicted in FIG. 4A;
FIG. 4C is a diagram depicting an example of hardware configuration of an eNB;
FIG. 5A is a diagram depicting an example of a UE on a company A side;
FIG. 5B is a diagram depicting an example of signal flow in the UE depicted in FIG. 5A;
FIG. 5C is a diagram depicting an example of a UE on a company D side;
FIG. 5D is a diagram depicting an example of signal flow in the UE on the company D and depicted in FIG. 5C;
FIG. 5E is a diagram depicting an example of UE hardware configuration;
FIG. 6 is a flowchart of an example of processing by an eNB;
FIG. 7 is a flowchart of an example of processing by a UE on the company A side according to the first embodiment;
FIG. 8 is a flowchart of an example of processing by a UE on the company D side according to the first embodiment;
FIG. 9 is a sequence diagram of a modification example of operation in the wireless communications system according to the first embodiment;
FIG. 10 is a sequence diagram depicting an example of operation of the wireless communications system according to a second embodiment;
FIG. 11 is a flowchart of an example of processing by a UE of company A according to the second embodiment;
FIG. 12 is a flowchart of an example of processing by a UE on the company D side according to the second embodiment;
FIG. 13 is a sequence diagram of a modification example of operation in the wireless communications system according to the second embodiment;
FIG. 14 is a sequence diagram depicting an example of operation in the wireless communications system according to a third embodiment;
FIG. 15 is a flowchart of an example of processing by a UE on the company A according to the third embodiment;
FIG. 16 is a flowchart of an example of processing by a UE on the company D side according to the third embodiment;
FIG. 17 is a sequence diagram depicting an example of operation in the wireless communications system according to a fourth embodiment;
FIG. 18 is a flowchart of an example of processing by a UE on the company A side according to the fourth embodiment;
FIG. 19 is a flowchart of an example of processing by a UE on the company D side according to the fourth embodiment;
FIG. 20 is a sequence diagram depicting an example of operation in the wireless communications system according to a fifth embodiment;
FIG. 21 is a flowchart of an example of processing by a UE on the company A side according to the fifth embodiment;
FIG. 22 is a flowchart of an example of processing by a UE on the company D side according to the fifth embodiment;
FIG. 23 is a sequence diagram depicting an example of operation in the wireless communications system according to a sixth embodiment;
FIG. 24 is a flowchart of an example of processing by a UE on the company A side according to the sixth embodiment;
FIG. 25 is a flowchart of an example of processing by a UE on the company D side according to the sixth embodiment;
FIG. 26 is a sequence diagram depicting an example of operation in the wireless communications system according to a seventh embodiment; and
FIG. 27 is a sequence diagram depicting an example of operation in the wireless communications system according to an eighth embodiment.

### BEST MODE(S) FOR CARRYING OUT THE INVENTION

Embodiments of a wireless communications system, a base station, a terminal, and a communications method according to the present invention will be described in detail with reference to the accompanying drawings.

### (First embodiment)

### (Wireless communications system according to first embodiment)

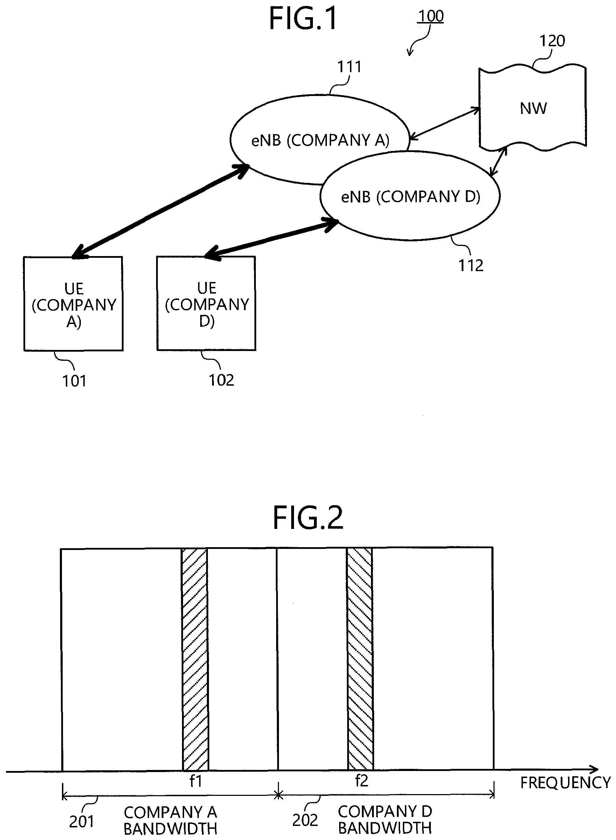

FIG. 1 is a diagram depicting an example of a wireless communications system according to a first embodiment. As depicted in FIG. 1, a wireless communications system 100 according to the first embodiment, for example, includes (user equipment (UEs): user terminals) 101, 102 and evolved Nodes B (eNBs) 111, 112.

The eNB 111 is a base station operated by company A. The eNB 112 is a base station operated by company D. Company A and company D are mutually different operators (telecommunications carriers). The eNBs 111, 112 are each connected to a network 120. The network 120, for example, is a wide area network such as the Internet.

The UE 101 is a terminal of a user having a contract with company A. The UE 101 is capable of wirelessly connecting to the eNB 111 and communicating with the network 120(NW) via the eNB 111. The UE 102 is a terminal of a user having a contract with company D. The UE 102 is capable of wirelessly connecting to the eNB 112 and communicating with the network 120 via the eNB 112. The UEs 101, 102 are capable of D2D communication of directly communicating with each other.

The base station of the wireless communications system 100 is not limited to an eNB such as the eNBs 111, 112 and various types of base stations of a mobile communications network may be used. Furthermore, a terminal in the wireless communications system 100 is not limited to a (UE) such as the UEs 101, 102 and various types of terminals of a mobile communications network may be used.

### (Bandwidth assigned to operators)

FIG. 2 is a diagram depicting an example of bandwidth assigned to operators. In FIG. 2, the horizontal axis represents frequency. A bandwidth 201 (company A bandwidth) is a radio frequency bandwidth assigned to company A. The UE 101 uses the bandwidth 201 and wirelessly communicates with the eNB 111. The bandwidth 201 includes a frequency bandwidth f1 (predetermined bandwidth) that can be used in D2D communication between a UE (for example, the UE 101) of company A and a UE (for example, the UE 102) of an operator different from company A.

A bandwidth 202 (company D bandwidth) is a radio frequency bandwidth assigned to company D. The UE 102 uses the bandwidth 202 and wirelessly communicates with the eNB 112. The bandwidth 202 includes a frequency bandwidth f2 (predetermined bandwidth) that can be used in D2D communication between a UE (for example, the UE 102) of company D and a UE (for example, the UE 101) of an operator different from company D.

The frequency bandwidths f1, f2, for example, may be configured as frequency bandwidths dedicated for D2D communication with a UE of another operator. As a result, D2D communication between UEs of differing operators may be performed while suppressing interference with other communication such as communication between a base station and a terminal. Alternatively, the frequency bandwidths f1, f2, for example, may be configured as common frequency bandwidths for D2D communication with a UE of another operator and communication between a base station and a terminal. As a result, D2D communication with a UE of another operator is enabled while suppressing decreases in the resources that may be assigned for other communication.

The frequency bandwidths f1, f2, for example, may be configured as fixed system frequencies configured at the time of installation of the eNBs 111, 112. Further, the frequency bandwidths f1, f2 may be determined by the eNBs 111, 112 mutually communicating through the network 120. Further, the eNBs 111, 112 may each periodically determine the frequency bandwidth f1, f2 thereof.

In the example depicted in FIG. 2, although the bandwidths 201, 202 are adjacent, the bandwidths 201, 202 may be frequency bandwidths that are away from each other. Further, in the example depicted in FIG. 2, although the bandwidth 201 is a frequency bandwidth lower than that of the bandwidth 202, the bandwidth 201 may be a frequency bandwidth higher than that of the bandwidth 202.

In the first embodiment, an example will be described in which the UE 101 uses the frequency bandwidth f1 of the operator thereof (company A) in data transmission.

### (Operation in wireless communications system according to first embodiment)

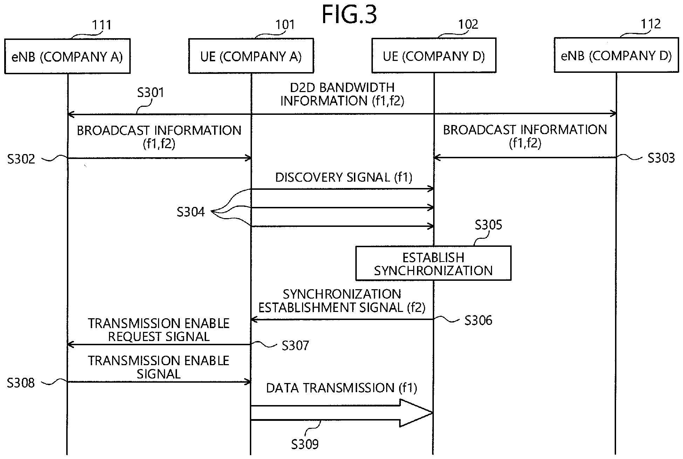

FIG. 3 is a sequence diagram depicting an example of operation the wireless communications system according to the first embodiment. In the wireless communications system 100, for example, steps depicted in FIG. 3 are executed. First, the eNB 111 (company A) and the eNB 112 (company D) exchange D2D bandwidth information (step S301).

For example, the eNB 111 transmits to the eNB 112, D2D bandwidth information indicating the frequency bandwidth f1 that is within the bandwidth 201 of the eNB 111 and can be used in D2D communication with another company. The eNB 112 transmits to the eNB 111, D2D bandwidth information indicating the frequency bandwidth f2 that is within the bandwidth 202 of the eNB 112 and can be used in D2D communication with another company. In the exchange of D2D bandwidth information at step S301, for example, an X2 interface connecting the eNB 111 and the eNB 112 may be used.

Next, the eNB 111 transmits to the UE 101, broadcast information that includes D2D bandwidth information indicating the frequency bandwidth f1 that is within the bandwidth 201 of the eNB 111 and can be used in D2D communication with another company, and the frequency bandwidth f2 obtained at step S301 (step S302). As a result, the UE 101 may be notified of the frequency bandwidths f1, f2. Broadcast information that includes D2D bandwidth information, for example, is transmitted periodically.

The UE 101 may be notified of the frequency bandwidth f1 at a timing different from the frequency bandwidth f2. Further, configuration may be such that the frequency bandwidth f1 is pre-stored to a memory of the UE 101 whereby the UE 101 is not notified of the frequency bandwidth f1.

In the broadcast information transmitted at step S302, for example, system information blocks (SIBs) or master information blocks (MIBs) may be used. For example, TS36.331 of the 3GPP defines a region of "Inter Operator D2D Frequency" (provisional name) in a SIB and in the broadcast information transmitted at step S302, this region may be used.

The eNB 112 transmits to the UE 102, broadcast information that includes D2D bandwidth information indicating the frequency bandwidth f2 that is within the bandwidth 202 of the eNB 112 and can be used in D2D communication with another company, and the frequency bandwidth f1 obtained at step S301 (step S303). As a result, the UE 102 may be notified of the frequency bandwidths f1, f2.

The UE 102 may be notified of the frequency bandwidth f2 at a timing different from the frequency bandwidth f1. Further, configuration may be such that the frequency bandwidth f2 is pre-stored to a memory of the UE 102 whereby the UE 102 is not notified of the frequency bandwidth f2. In the broadcast information transmitted at step S303, for example, SIB or MIB may be used.

The UE 101 transmits to the UE 102, a discovery signal (radio signal) by the frequency bandwidth f1 that can be used in D2D communication with another company and that is within the bandwidth 201 of company A to which the UE 101 belongs (step S304). In the example depicted in FIG. 3, the UE 101 transmits the discovery signal multiple times.

In response, the UE 102 performs a reception process for the frequency bandwidth f1 notified at step S303 is thereby able to receive the discovery signal of the frequency bandwidth f1 from the UE 101 at step S304. The UE 102 establishes synchronization with the UE 101, based on the received discovery signal (step S305).

The UE 102 transmits a synchronization establishment signal (radio signal) indicating that synchronization has been established, the synchronization signal is transmitted to the UE 101 by the frequency bandwidth f2 that can be used in D2D communication with another company and that is within the bandwidth 202 of company D to which the UE 102 belongs (step S306). In response, the UE 101 performs a reception process for the frequency bandwidth f2 notified at step S302 and thereby, is able to receive the synchronization establishment signal from the UE 102 at step S306.

The UE 101 transmits to the eNB 111, a transmission enable request signal requesting permission for data transmission to the UE 102 by D2D communication (step S307). In the transmission of the transmission enable request signal at step S307, for example, an uplink control channel assigned to the UE 101 by the eNB 111 may be used.

The eNB 111 transmits to the UE 101, a transmission enable signal permitting data transmission to the UE 102 by D2D communication (step S308). In the transmission of the transmission enable signal at step S308, for example, a downlink control channel assigned to the UE 101 by the eNB 111 may be used.

The UE 101 performs data transmission (transmission of a radio signal) to the UE 102 by D2D communication using the frequency bandwidth f1 (step S309). The data transmission at step S309, for example, is performed using a frequency included in the frequency bandwidth f1. In response, the UE 102 performs a reception process for the frequency bandwidth f1 notified at step S303 and thereby, is able to receive data from the UE 101 at step S309.

For example, the UE 101 may perform data transmission by a frequency pre-specified in the frequency bandwidth f1. Further, the UE 101 may perform data transmission by a frequency in the frequency bandwidth f1 corresponding to the discovery signal (for example, a sequence number of the discovery signal) transmitted at step S304. The UE 101 may perform data transmission by a frequency notified to the UE 102 by the discovery signal transmitted at step S304. As a result, the UE 102 is able to receive data from the UE 101 without performing reception processes for the entire frequency bandwidth f1.

The eNB 111, when receiving the transmission enable request signal at step S307, may determine within the frequency bandwidth f1, a frequency to be used for data transmission to the UE 102 from the UE 101. The eNB 111 stores a result of the determination to the transmission enable signal at step S308. In this case, at step S309, the UE 101 performs data transmission to the UE 102 by D2D communication using the frequency indicated by the determination result stored to the transmission enable signal.

Alternatively, the UE 101 may determine within the frequency bandwidth f1, a frequency to be used for data transmission to the UE 102. In this case, at step S309, the UE 101 uses the determined frequency to perform data transmission to the UE 102. In this case, configuration may be such that the eNB 111 does not determine the frequency to be used for data transmission from the UE 101 to the UE 102.

### (eNB)

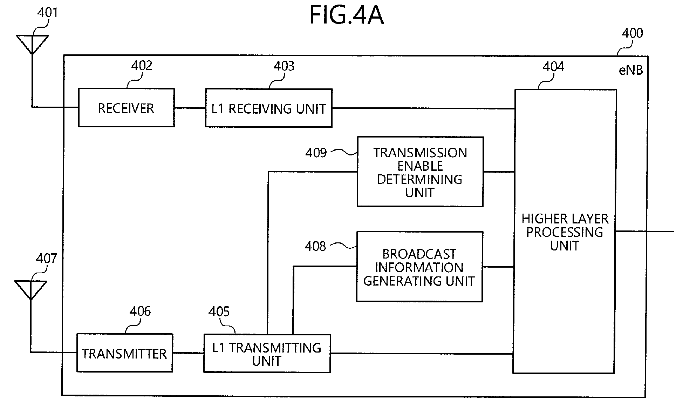

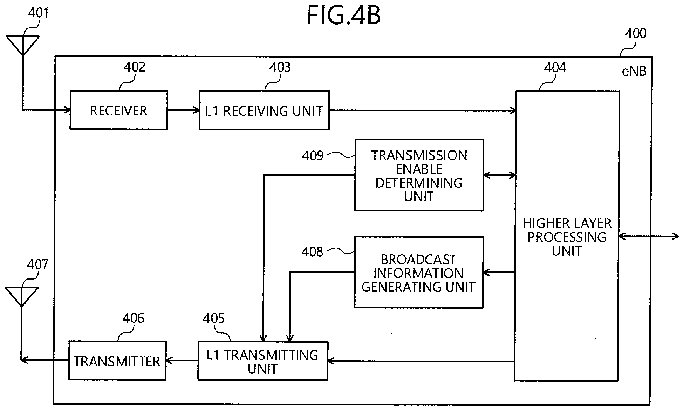

FIG. 4A is a diagram depicting an example of an eNB. FIG. 4B is a diagram depicting an example of signal flow in the eNB depicted in FIG. 4A. The eNBs 111, 112, for example, each may be realized by an eNB 400 depicted in FIGs. 4A and 4B.

The eNB 400 includes a reception antenna 401, a receiver 402, an L1 receiving unit 403, a higher layer processing unit 404, an L1 transmitting unit 405, a transmitter 406, a transmission antenna 407, a broadcast information generating unit 408, and a transmission enable determining unit 409.

The receiver 402 receives, via the reception antenna 401, a signal wirelessly transmitted from another communications apparatus (for example, a UE). The receiver 402 outputs the received signal to the L1 receiving unit 403. The L1 receiving unit 403 performs an L1 (physical layer) reception process for the signal output from the receiver 402. The L1 receiving unit 403 outputs data obtained by the L1 reception process to the higher layer processing unit 404.

The higher layer processing unit 404 performs a higher layer reception process for the data output from the L1 receiving unit 403. The reception process by the higher layer processing unit 404, for example, includes an L2 (Media Access Control (MAC) layer) reception process. The higher layer processing unit 404 outputs data obtained by the reception process. The data output from the higher layer processing unit 404, for example, is transmitted to the network 120.

The higher layer processing unit 404, for example, further performs a higher layer transmission process for data received from the network 120. The transmission process by the higher layer processing unit 404, for example, includes an L2 transmission process. The higher layer processing unit 404 outputs data obtained by the transmission process to the L1 transmitting unit 405.

The higher layer processing unit 404 further outputs to the broadcast information generating unit 408, information to be stored to the broadcast information from the eNB 400. The information to be stored to the broadcast information includes a frequency bandwidth that is within the bandwidth of the eNB 400 and that can be used in D2D communication with another company. The information to be stored in the broadcast information further includes D2D bandwidth information indicating a frequency bandwidth that is within the bandwidth of another company and that can be used in D2D communication with the eNB 400. This D2D bandwidth information, for example, may be received from an eNB of another company using the X2 interface or the like.

The higher layer processing unit 404 further uses, for example, the X2 interface or the like to transmit to an eNB of another company, D2D bandwidth information indicating a frequency bandwidth that is within the bandwidth of the eNB 400 and that can be used in D2D communication with another company. The higher layer processing unit 404 outputs to the transmission enable determining unit 409, a transmission enable request signal included in the data output from the L1 receiving unit 403.

The L1 transmitting unit 405 performs an L1 transmission process for the information and the data output from the higher layer processing unit 404, the broadcast information generating unit 408, and the transmission enable determining unit 409. The L1 transmitting unit 405 outputs to the transmitter 406, a signal (transmission signal) corresponding to the L1 transmission process. The transmitter 406 wirelessly outputs to another communications apparatus, via the transmission antenna 407, the signal output from the L1 transmitting unit 405.

The broadcast information generating unit 408 generates broadcast information storing the information output from the higher layer processing unit 404. The broadcast information generated by the broadcast information generating unit 408, for example, includes SIBs or MIBs. The broadcast information generating unit 408 outputs the generated broadcast information to the L1 transmitting unit 405.

The transmission enable determining unit 409, when the transmission enable request signal is output from the higher layer processing unit 404, determines whether to permit data transmission by D2D communication. For example, the transmission enable determining unit 409 makes an inquiry to the higher layer processing unit 404 concerning radio resource availability and is able to make a determination according to the result of the inquiry. The transmission enable determining unit 409, when determining to permit data transmission by D2D communication, outputs a transmission enable signal to the L1 transmitting unit 405.

A transmitting unit that transmits broadcast information including D2D bandwidth information may be realized by the L1 transmitting unit 405, the transmitter 406, the transmission antenna 407, and the broadcast information generating unit 408.

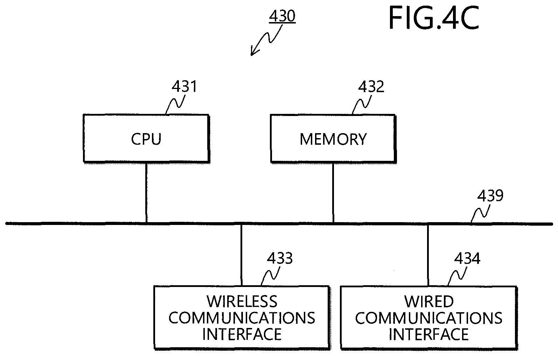

FIG. 4C is a diagram depicting an example of hardware configuration of an eNB. The eNB 400 depicted in FIGs. 4A and 4B, for example, may be realized by a communications apparatus 430 depicted in FIG. 4C. The communications apparatus 430 includes a central processing unit (CPU) 431, a memory 432, a wireless communications interface 433, and a wired communications interface 434. The CPU 431, the memory 432, the wireless communications interface 433, and the wired communications interface 434 are connected by a bus 439.

The CPU 431 governs overall control of the communications apparatus 430. The memory 432, for example, includes main memory and auxiliary memory. The main memory, for example, is random access memory (RAM) and is used as work area of the CPU 431. The auxiliary memory, for example, is non-volatile memory such as a magnetic disk, an optical disk, a flash memory, and the like. The auxiliary memory stores various programs that cause the communications apparatus 430 to operate. Programs stored in the auxiliary memory are loaded onto the main memory and executed by the CPU 431.

The wireless communications interface 433 is a communications interface that that performs wireless communication with external devices (for example, UE) of the communications apparatus 430. The wireless communications interface 433 is controlled by the CPU 431.

The wired communications interface 434 is a communications interface that performs communication by a cable with external devices (for example, higher apparatuses, other eNBs) of the communications apparatus 430. The wired communications interface 434 is controlled by the CPU 431. For example, the wired communications interface 434 includes the X2 interface for performing the information exchange with another eNB at step S301 depicted in FIG. 3.

The reception antenna 401, the receiver 402, the transmitter 406, and the transmission antenna 407 depicted in FIGs. 4A and 4B, for example, may be realized by the wireless communications interface 433. The L1 receiving unit 403, the higher layer processing unit 404, the L1 transmitting unit 405, the broadcast information generating unit 408, and the transmission enable determining unit 409 depicted in FIGs. 4A and 4B, for example, may be realized by the CPU 431 and the memory 432.

### (UE on company A side)

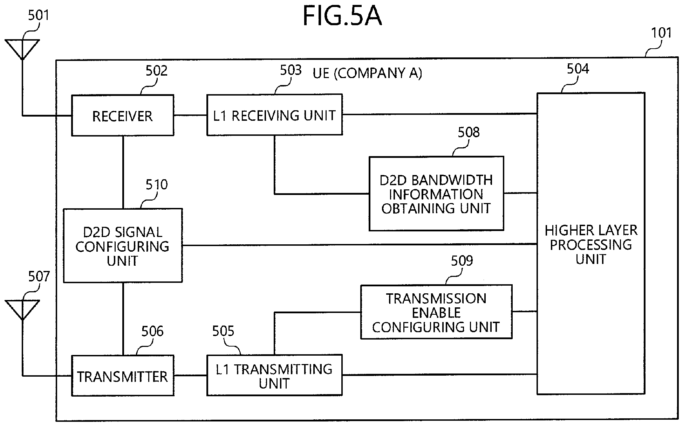

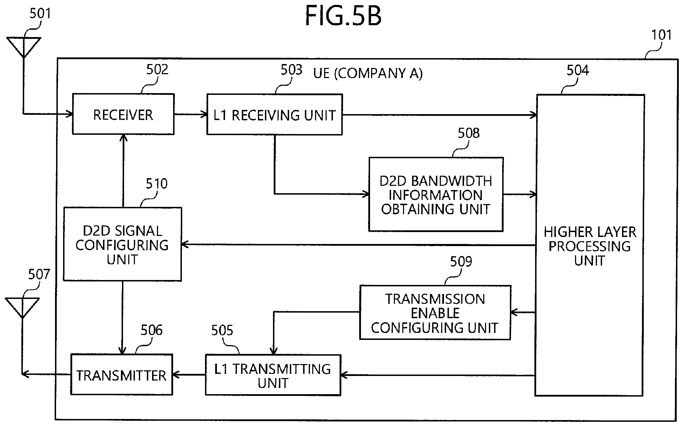

FIG. 5A is a diagram depicting an example of a UE on the company A side. FIG. 5B is a diagram depicting an example of signal flow in the UE depicted in FIG. 5A. The UE 101 depicted in FIG. 3, for example, may be realized by the UE 101 depicted in FIGs. 5A and 5B.

The UE 101 includes a reception antenna 501, a receiver 502, an L1 receiving unit 503, a higher layer processing unit 504, an L1 transmitting unit 505, a transmitter 506, and a transmission antenna 507. The UE 101 further includes a D2D bandwidth information obtaining unit 508, a transmission enable configuring unit 509, and a D2D signal configuring unit 510.

The receiver 502 receives, via the reception antenna 501, a signal wirelessly transmitted from another communications apparatus (for example, eNB). The receiver 502 outputs the received signal to the L1 receiving unit 503. The L1 receiving unit 503 performs an L1 (physical layer) reception process for the signal output from the receiver 502. The L1 receiving unit 503 outputs data obtained by the L1 reception process to the higher layer processing unit 504 and the D2D bandwidth information obtaining unit 508.

The higher layer processing unit 504 performs a higher layer reception process for the data output from the L1 receiving unit 503. The reception process by the higher layer processing unit 504, for example, includes a L2 reception process. Further, the higher layer processing unit 504 performs a higher layer transmission process. The transmission process by the higher layer processing unit 504, for example, includes an L2 transmission process. The higher layer processing unit 504 outputs data obtained by the transmission process to the L1 transmitting unit 505.

The higher layer processing unit 504 notifies the D2D signal configuring unit 510 of the frequency bandwidth f1 that is within the bandwidth 201 of company A to which the UE 101 belongs and that can be used in D2D communication with another company. The higher layer processing unit 504 further notifies the D2D signal configuring unit 510 of the frequency bandwidth f2 indicated by the D2D bandwidth information output from the D2D bandwidth information obtaining unit 508.

The higher layer processing unit 504, upon an execution request for D2D communication, outputs a D2D communication request to the transmission enable configuring unit 509. The higher layer processing unit 504 further outputs to the transmission enable configuring unit 509, a transmission enable signal included in the data output from the L1 receiving unit 503.

The L1 transmitting unit 505 performs an L1 transmission process for the data output from the higher layer processing unit 504. The L1 transmitting unit 505 transmits to the transmitter 506, a signal (transmission signal) corresponding to the L1 transmission process. The transmitter 506 wirelessly transmits to another communications apparatus, via the transmission antenna 507, the signal output from the L1 transmitting unit 505.

The D2D bandwidth information obtaining unit 508 obtains D2D bandwidth information that is from an eNB of another company and included in the data output from the L1 receiving unit 503. The D2D bandwidth information obtaining unit 508 outputs the obtained D2D bandwidth information to the higher layer processing unit 504.

The transmission enable configuring unit 509 outputs a transmission enable request signal to the L1 transmitting unit 505, based on the D2D communication request output from the higher layer processing unit 504. As a result, the transmission enable request signal is transmitted to the eNB 111. Further, the transmission enable configuring unit 509, when a transmission enable signal is output from the higher layer processing unit 504 in response to the transmission enable request signal, controls the L1 transmitting unit 505 to execute D2D communication.

The D2D signal configuring unit 510 controls the receiver 502 to perform a reception process for the frequency bandwidth f2 notified by the higher layer processing unit 504. The D2D signal configuring unit 510 controls the transmitter 506 (or the L1 transmitting unit 505) to transmit D2D communication using the frequency bandwidth f1 notified by the higher layer processing unit 504.

A receiving unit that receives broadcast information including D2D bandwidth information, for example, may be realized by the reception antenna 501, the receiver 502, the L1 receiving unit 503, and the D2D bandwidth information obtaining unit 508. Further, a communications unit that performs D2D communication (direct communication) based on received broadcast information, for example, may be realized by the reception antenna 501, the receiver 502, the L1 receiving unit 503, the L1 transmitting unit 505, the transmitter 506, the transmission antenna 507, and the D2D signal configuring unit 510.

### (UE on company D side)

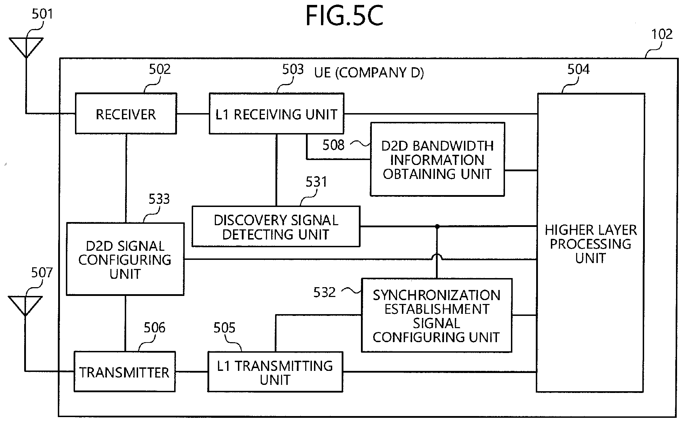

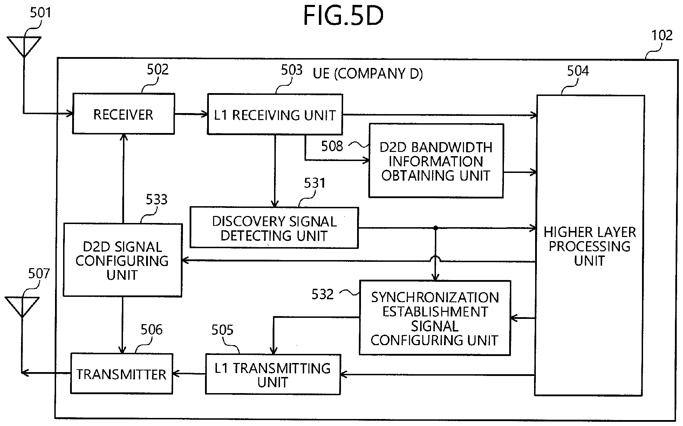

FIG. 5C is a diagram depicting an example of a UE on the company D side. FIG. 5D is a diagram depicting an example of signal flow in the UE on the company D and depicted in FIG. 5C. The UE 102 depicted in FIG. 3, for example, may be realized by the UE 102 depicted in FIGs. 5C and 5D. In FIGs. 5C and 5D, parts identical to those depicted in FIGs. 5A and 5B are given the same reference numerals used in FIGs. 5A and 5B and description thereof is omitted hereinafter.

The UE 102 includes the reception antenna 501, the receiver 502, the L1 receiving unit 503, the higher layer processing unit 504, the L1 transmitting unit 505, the transmitter 506, and the transmission antenna 507. The UE 102 further includes the D2D bandwidth information obtaining unit 508, a discovery signal detecting unit 531, a synchronization establishment signal configuring unit 532, and a D2D signal configuring unit 533. The L1 receiving unit 503 outputs data obtained by an L1 reception process to the higher layer processing unit 504, the D2D bandwidth information obtaining unit 508, and the discovery signal detecting unit 531.

The higher layer processing unit 504 notifies the D2D signal configuring unit 533 of the frequency bandwidth f2 that is within the bandwidth 202 of company D to which the UE 102 belongs and that can be used in D2D communication with another company. The higher layer processing unit 504 further notifies the D2D signal configuring unit 533 of the frequency bandwidth f1 indicated by the D2D bandwidth information output from the D2D bandwidth information obtaining unit 508. The higher layer processing unit 504, upon an execution request for D2D communication, outputs a D2D communication request to the synchronization establishment signal configuring unit 532.

The L1 transmitting unit 505 performs an L1 transmission process for the signals and data output from the higher layer processing unit 504 and the synchronization establishment signal configuring unit 532.

The discovery signal detecting unit 531 detects a discovery signal that is included in the data output from the L1 receiving unit 503 and that is from the UE 101. The discovery signal detecting unit 531 outputs the detected discovery signal to the higher layer processing unit 504 and the synchronization establishment signal configuring unit 532.

The synchronization establishment signal configuring unit 532, when the D2D communication request is output from the higher layer processing unit 504, establishes synchronization with the UE 101, based on the discovery signal output from the discovery signal detecting unit 531. The synchronization establishment signal configuring unit 532, when establishing synchronization, outputs a synchronization establishment signal to the L1 transmitting unit 505.

The D2D signal configuring unit 533 controls the receiver 502 to perform a reception process for the frequency bandwidth f1 notified by the higher layer processing unit 504. The D2D signal configuring unit 533 further controls the transmitter 506 (or the L1 transmitting unit 505) to transmit D2D communication using the frequency bandwidth f2 notified by the higher layer processing unit 504.

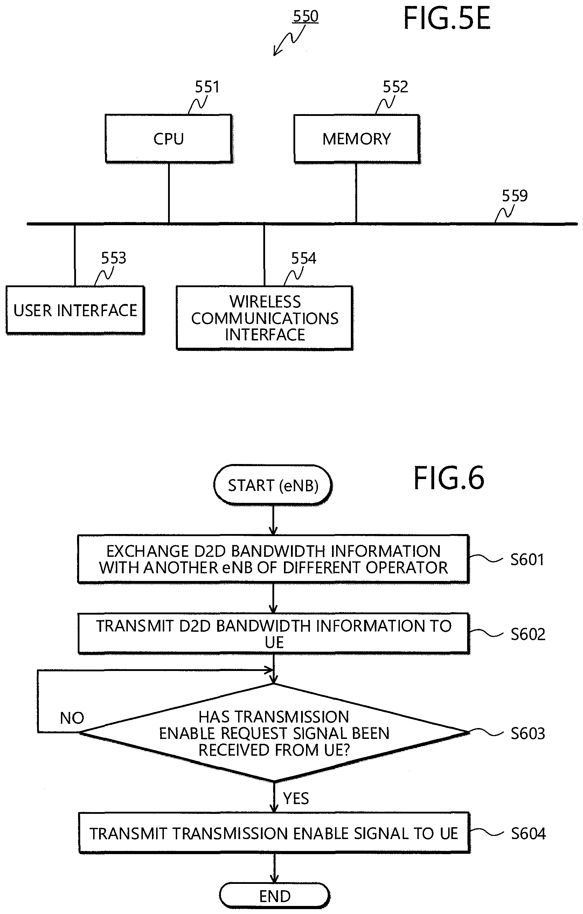

The UE 101 may further include the discovery signal detecting unit 531, the synchronization establishment signal configuring unit 532, and the D2D signal configuring unit 533 depicted in FIGs. 5C and 5D. The UE 102 may further include the transmission enable configuring unit 509 depicted in FIGs. 5A and 5. As a result, operations identical to the operations depicted in FIG. 3 may be performed by both of the UEs 101, 102.

FIG. 5E is a diagram depicting an example of UE hardware configuration. The UE 101 depicted in FIGs. 5A and 5B, for example, may be realized by a communications apparatus 550 depicted in FIG. 5E. The communications apparatus 550 includes a CPU 551, a memory 552, a user interface 553, and a wireless communications interface 554. The CPU 551, the memory 552, the user interface 553, and the wireless communications interface 554 are connected by a bus 559.

The CPU 551 governs overall control of the communications apparatus 550. The memory 552, for example, includes main memory and auxiliary memory. The main memory, for example, is RAM and is used as a work area of the CPU 551. The auxiliary memory, for example, is non-volatile memory such as a magnetic disk, a flash memory, and the like. The auxiliary memory stores various programs that cause the communications apparatus 550 to operate. Programs stored in the auxiliary memory are load onto the main memory and are executed by the CPU 551.

The user interface 553, for example, includes an input device that receives operational input from the user and an output device that outputs information to the user. The input device, for example, may be realized by keys (for example, a keyboard), a remote controller, or the like. The output device, for example, may be realized by a display, a speaker, or the like. Further, the input device and the output device may be realized by a touch panel, or the like. The user interface 553 is controlled by the CPU 551.

The wireless communications interface 554 is a communications interface that performs wireless communication with an external device (for example, an eNB or another UE) of the communications apparatus 550. The wireless communications interface 554 is controlled by the CPU 551. For example, the wireless communications interface 554 includes an interface that performs D2D communication with another UE.

The reception antenna 501, the receiver 502, the transmitter 506, and the transmission antenna 507 depicted in FIGs. 5A and 5B, for example, may be realized by the wireless communications interface 554. The L1 receiving unit 503, the higher layer processing unit 504, the L1 transmitting unit 505, the D2D bandwidth information obtaining unit 508, the transmission enable configuring unit 509, and the D2D signal configuring unit 510 depicted in FIGs. 5A and 5B, for example, may be realized by the CPU 551 and the memory 552.

The UE 102 depicted in FIGs. 5C and 5D, for example, may also be realized by the communications apparatus 550 depicted in FIG. 5E. The reception antenna 501, the receiver 502, the transmitter 506, and the transmission antenna 507 depicted in FIGs. 5C and 5D, for example, may be realized by the wireless communications interface 554. The L1 receiving unit 503, the higher layer processing unit 504, the L1 transmitting unit 505, and the D2D bandwidth information obtaining unit 508 depicted in FIGs. 5C and 5D, for example, may be realized by the CPU 551 and the memory 552. The discovery signal detecting unit 531, the synchronization establishment signal configuring unit 532, and the D2D signal configuring unit 533 depicted in FIGs. 5C and 5D, for example, may be realized by the CPU 551 and the memory 552.

### (Processing by eNB)

FIG. 6 is a flowchart of an example of processing by an eNB. The eNB 400, for example, executes the steps depicted in FIG. 6.

The eNB 400 transmits D2D bandwidth information to and receives D2D bandwidth information from another eNB of a different operator (step S601). For example, the eNB 400 transmits D2D bandwidth information indicating a D2D frequency of the eNB 400 to another eNB and receives from the other eNB for which the operator is different, D2D bandwidth information indicating a D2D frequency of the other eNB.

The eNB 400 transmits the D2D bandwidth information of the eNB 400 and of the other eNB to UEs connected to the eNB 400 (step S602). In the transmission of the D2D bandwidth information at step S602, broadcast information such as the SIB and MIB described above may be used.

The eNB 400 determines whether a transmission enable request signal requesting permission for data transmission by D2D communication has been received from a UE (step S603), and waits for receipt of a transmission enable request signal (step S603: NO). At step S603, when a transmission enable request signal is received (step S603: YES), the eNB 400 transmits a transmission enable signal to the UE that is the transmission source of the transmission enable request signal (step S604), ending the series of operations.

The eNB 400, at step S604, may assign a frequency for UE D2D communication. In this case, when a frequency has been assigned for UE D2D communication, the eNB 400 stores to the transmission enable signal, information indicating the assigned frequency. Further, when no frequency has been assigned for UE D2D communication, the eNB 400 returns to step S603 without transmitting the transmission enable signal.

At step S601, although a case has been described where D2D bandwidth information is transmitted and received, the transmission and the reception of the D2D bandwidth information may be performed at different timings. Further, at step S603, the eNB 400 may return to step S601 when no transmission enable request signal has been received and a predetermined period has elapsed since step S602.

### (Processing by UE on company A side according to first embodiment)

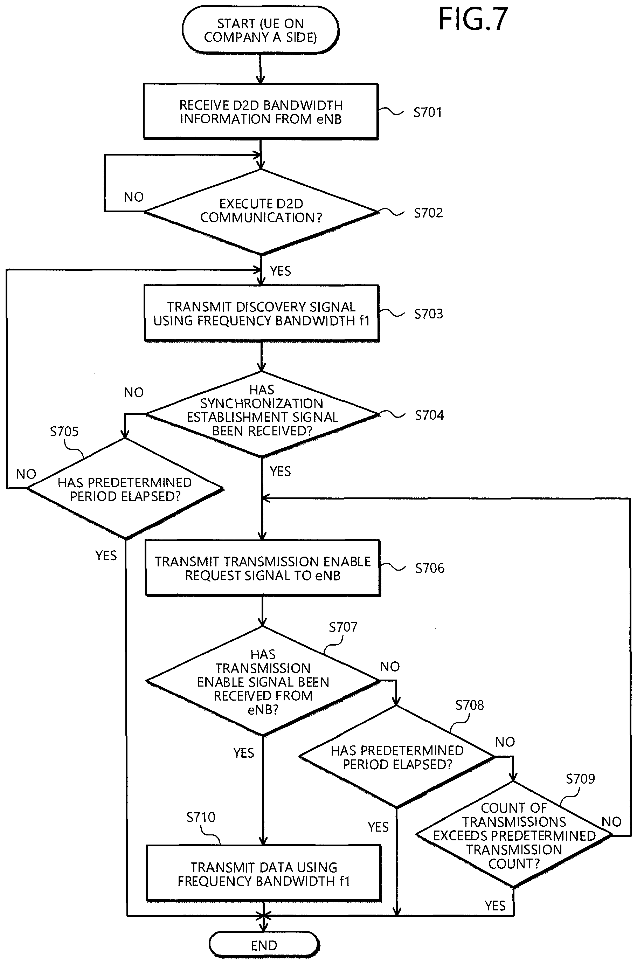

FIG. 7 is a flowchart of an example of processing by a UE on the company A side according to the first embodiment. The UE 101 on the company A side, for example, executes the steps depicted in FIG. 7. The UE 101 receives from the eNB 111 to which the UE 101 is connected, the D2D bandwidth information indicating the frequency bandwidths f1, f2 (step S701).

The UE 101 determines whether to execute D2D communication (step S702), and stands by until execution of D2D communication is determined (step S702: NO). For example, the UE 101 determines that D2D communication is to be executed when receiving a start instruction for D2D communication from the user of the UE 101 or when there is a request for D2D communication in an application under execution by the UE 101. For example, the UE 101 may return to step S701 when a predetermined period has elapsed and no determination has been made to execute D2D communication.

At step S702, when determining to execute D2D communication (step S702: YES), the UE 101 transmits a discovery signal using the frequency bandwidth f1 (step S703). The UE 101 determines whether a synchronization establishment signal has been received from the UE 102 (step S704).

At step S704, if no synchronization establishment signal has been received (step S704: NO), the UE 101 determines whether a predetermined period has elapsed since transition from step S702 to step S703 (step S705). If the predetermined period has elapsed (step S705: YES), the UE 101 ends the series of operations. If the predetermined period has not elapsed (step S705: NO), the UE 101 returns to step S703.

At step S704, if a synchronization establishment signal has been received (step S704: YES), the UE 101 transmits a transmission enable request signal to the eNB 111 to which the UE 101 is connected (step S706). The UE 101 determines whether a transmission enable signal in response to the transmission enable request signal transmitted at step S706 has been received from the eNB 111 (step S707).

At step S707, if no transmission enable signal has been received (step S707: NO), the UE 101 determines whether a predetermined period has elapsed since the transition from step S704 to step S706 (step S708).

At step S708, if the predetermined period has elapsed (step S708: YES), the UE 101 ends the series of operations. If the predetermined period has not elapsed (step 5708: NO), the UE 101 determines whether a count of transmissions of the transmission enable request signal at step S706 exceeds a predetermined transmission count (step S709).

At step S709, if the count of transmissions of the transmission enable request signal exceeds the predetermined transmission count (step S709: YES), the UE 101 ends the series of operations. If the count of transmissions of the transmission enable request signal does not exceed the predetermined transmission count (step S709: NO), the UE 101 returns to step S706.

At step S707, if a transmission enable signal has been received (step S707: YES), the UE 101 transmits data to the UE 102 using the frequency bandwidth f1 (step S710), and ends the series of operations.

### (Processing by UE on company D side according to first embodiment)

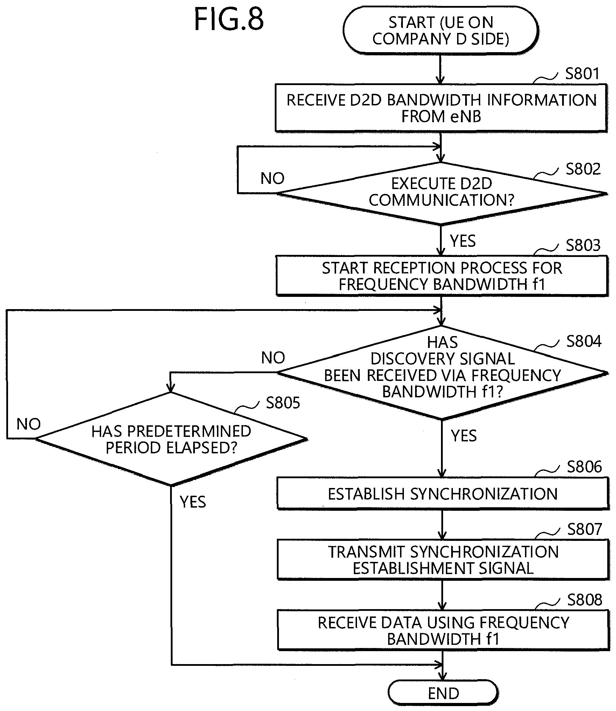

FIG. 8 is a flowchart of an example of processing by a UE on the company D side according to the first embodiment. The UE 102 on the company D side, for example, executes the steps depicted in FIG. 8. The UE 102 receives from the eNB 112 to which the UE 102 is connected, D2D bandwidth information indicating the frequency bandwidths f1, f2 (step S801).

The UE 102 determines whether D2D communication is to be executed (step S802), and stands by until execution of D2D communication is determined (step S802: NO). For example, the UE 102 determines that D2D communication is to be executed when receiving a start instruction for D2D communication from the user of the UE 102 or when there is a request for D2D communication in an application under execution by the UE 102. For example, the UE 102 may return to step S801 when a predetermined period has elapsed and no determination has been made to execute D2D communication.

At step S802, when determining to execute D2D communication (step S802: YES), the UE 102 starts a reception process for the frequency bandwidth f1 (step S803). Next, the UE 102 determines whether a discovery signal has been received via the frequency bandwidth f1 (step S804).

At step S804, if no discovery signal has been received (step S804: NO), the UE 102 determines whether a predetermined period has elapsed since transition from step S803 to step S804 (step S805). If the predetermined period has elapsed (step S805: YES), the UE 102 ends the series of operations. If the predetermined period has not elapsed (step S805: NO), the UE 102 returns to step S804.

At step S804, if a discovery signal has been received (step S804: YES), the UE 102 establishes synchronization with the UE 101, based on the received discovery signal (step S806). The UE 102 transmits a synchronization establishment signal to the UE 101 (step S807). The UE 102 receives data from the UE 101 using the frequency bandwidth f1 (step S808), ending the series operations.

### (Modification example of operation in wireless communications system according to first embodiment)

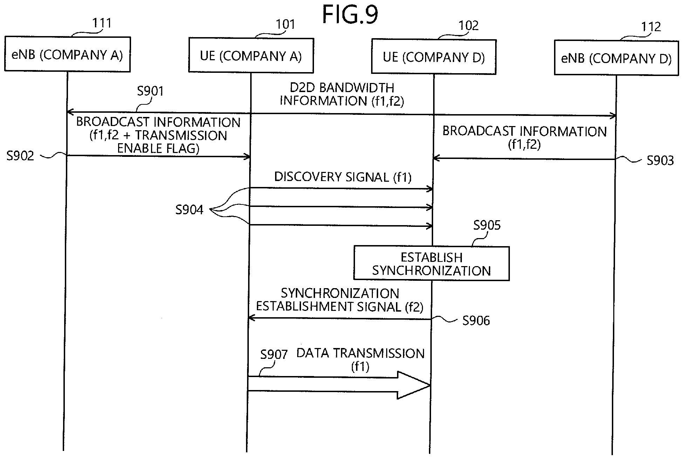

FIG. 9 is a sequence diagram of a modification example of operation in the wireless communications system according to the first embodiment. In the wireless communications system 100, for example, the steps depicted in FIG. 9 may be executed.

Steps S901 to S906 depicted in FIG. 9 are the same as steps S301 to S306 depicted in FIG. 3. However, in addition to the information indicating the frequency bandwidths f1, f2, the broadcast information transmitted at step S902 further includes a transmission enable flag indicating that data transmission by D2D communication using the frequency bandwidth f1 is permitted. After steps S901 to S906, the UE 101 transitions to step S907. Step S907 is the same as step S309 depicted in FIG. 3.

In this manner, by including the transmission enable flag in the broadcast information transmitted at step S902, the transmission of a transmission enable request signal from the UE 101 to the eNB 111 and the transmission of the transmission enable signal from the eNB 111 to the UE 101 may be omitted. In this case, at step S602 depicted in FIG. 6, the D2D bandwidth information and the transmission enable flag are transmitted together to the UE. Further, steps S603 and S604 may be omitted. Further, at step S701 depicted in FIG. 7, the D2D bandwidth information and the transmission enable flag are received together. Further, steps S706 to S709 may be omitted.

In this manner, according to the first embodiment, within the bandwidth 201 assigned to company A, the frequency bandwidth f1 that can be used in D2D communication (direct communication) with the UE 102 of company D is configured and the frequency bandwidth f1 may be broadcast from the eNB 112 to the UE 102. As a result, D2D communication between the UEs 101, 102 of differing operators becomes possible. Further, for example, for each execution of D2D communication, the amount of signaling for performing D2D communication may be suppressed compared to a method of transmitting and receiving information related to the frequency bandwidth f1.

Further, by using the frequency bandwidth f1 of the operator (company A) of the UE 101 in data transmission by D2D communication by the UE 101, the management of radio resources for data transmission by D2D communication may be performed at the eNB 111 on the operator side of the UE 101. Therefore, scheduling and interference control for D2D communication are facilitated.

The eNBs (for example, the eNBs 111, 112) exchanging D2D bandwidth information, for example, may be determined based on a distance between the eNBs. For example, the distance between the eNBs is calculated based on position information indicating the positions of the eNBs whereby eNBs within a predetermined distance from each other may be determined as eNBs that are to exchange D2D bandwidth information. However, in the method of determining the eNBs that are to exchange D2D bandwidth information, various determination methods may be used without limitation to those discussed herein.

### (Second embodiment)

Concerning a second embodiment, parts differing from the first embodiment will be described. In the second embodiment, a case will be described where the frequency bandwidth f1 of the operator (company A) of the UE 101 is used in data transmission by the UE 101 and the frequency bandwidth f2 of another operator (company D) is used in data reception by the UE 101.

### (Operation in wireless communications system according to second embodiment)

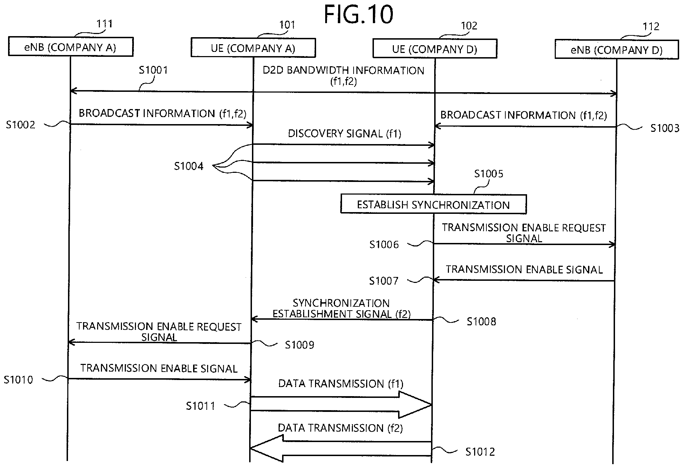

FIG. 10 is a sequence diagram depicting an example of operation of the wireless communications system according to the second embodiment. In the wireless communications system 100 according to the second embodiment, for example, the steps depicted in FIG. 10 are executed.

Steps S1001 to S1005 depicted in FIG. 10 are the same as steps S301 to S305 depicted in FIG. 3. After step S1005, the UE 102 transmits to the eNB 112, a transmission enable request signal requesting permission for data transmission to the UE 101 by D2D communication (step S1006). In the transmission of the transmission enable request signal at step S1006, for example, an uplink control channel assigned to the UE 102 by the eNB 112 may be used.

The eNB 112 transmits to the UE 102, a transmission enable signal permitting data transmission to the UE 102 by D2D communication (step S1007). In the transmission of the transmission enable signal at step S1007, for example, a downlink control channel assigned to the UE 102 by the eNB 112 may be used.

The UE 102 transitions step S1008. Steps S1008 to S1011 are the same as steps S306 to S309 depicted in FIG. 3. After step S1011, the UE 102 performs data transmission to the UE 101 by D2D communication using the frequency bandwidth f2 (step S1012).

The data transmission at step S1012 may be performed ahead of the data transmission at step S1011. Further, the data transmissions at steps S1011 and S1012 may be performed concurrently.

### (Processing by UE on company A side according second embodiment)

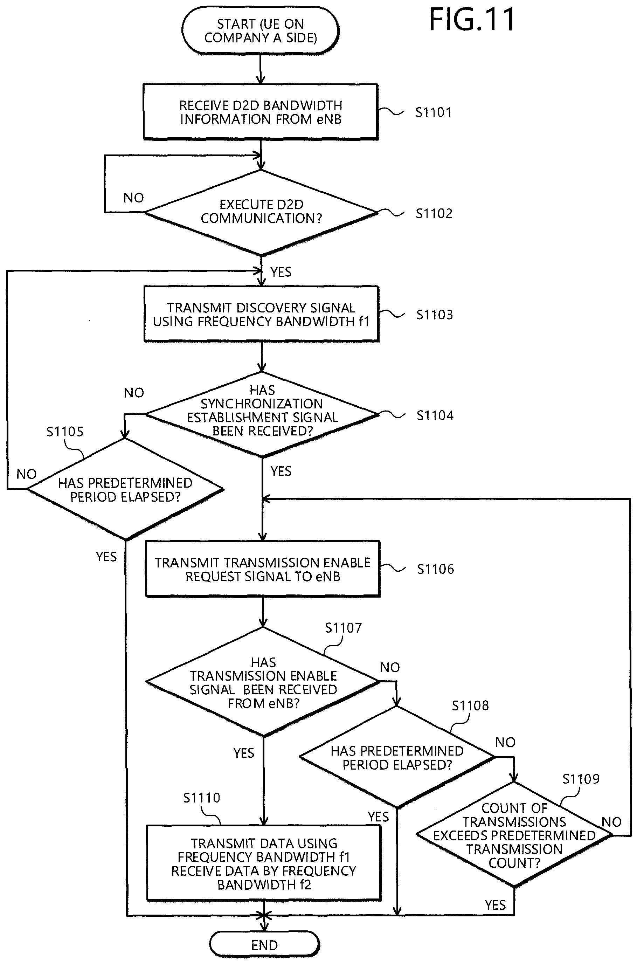

FIG. 11 is a flowchart of an example of processing by a UE of company A according to the second embodiment. The UE 101 on the company A side according to the second embodiment, for example, executes the steps depicted in FIG. 11. Steps S1101 to S1110 depicted in FIG. 11 are the same as steps S701 to S710 depicted in FIG. 7. However, at step S1110, the UE 101 transmits data to the UE 102 by the frequency bandwidth f1 and receives data from the UE 102 by the frequency bandwidth f2 (step S1110).

### (Processing by UE on company D side according to second embodiment)

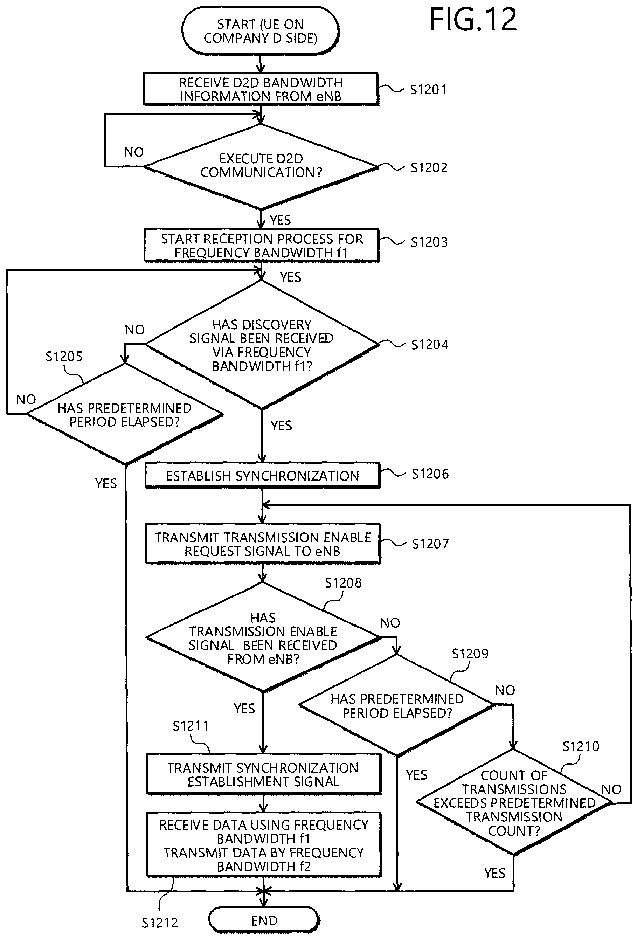

FIG. 12 is a flowchart of an example of processing by a UE on the company D side according to the second embodiment. The UE 102 on the company D side according to the second embodiment, for example, executes the steps depicted in FIG. 12. Steps S1201 to S1206 depicted in FIG. 12 are the same as steps S801 to S806 depicted in FIG. 8.

After step S1206, the UE 102 transmits a transmission enable request signal to the eNB 112 to which the UE 102 is connected (step S1207). The UE 102 determines whether a transmission enable signal in response to the transmission enable request signal transmitted at step S1207 has been received from the eNB 112 (step S1208).

At step S1208, if no transmission enable signal has been received (step S1208: NO), the UE 102 determines whether a predetermined period has elapsed since transition from step S1206 to step S1207 (step S1209).

At step S1209, if the predetermined period has elapsed (step S1209: YES), the UE 102 ends the series of operations. If the predetermined period has not elapsed (step S1209: NO), the UE 102 determines whether a count of transmissions of the transmission enable request signal at step S1207 exceeds a predetermined transmission count (step S1210).

At step S1210, if the count of transmissions of the transmission enable request signal exceeds the predetermined transmission count (step S1210: YES), the UE 102 ends the series of operations. If the count of transmissions of the transmission enable request signal does not exceed the predetermined transmission count (step S1210: NO), the UE 102 returns to step S1207.

At step S1208, if a transmission enable signal has been received (step S1208: YES), the UE 102 transmits a synchronization establishment signal to the UE 101 (step S1211). The UE 102 receives data from the UE 101 by the frequency bandwidth f1 and transmits data to the UE 101 by the frequency bandwidth f2 (step S1212), ending the series of operations.

### (Modification example of operation in wireless communications system according to second embodiment)

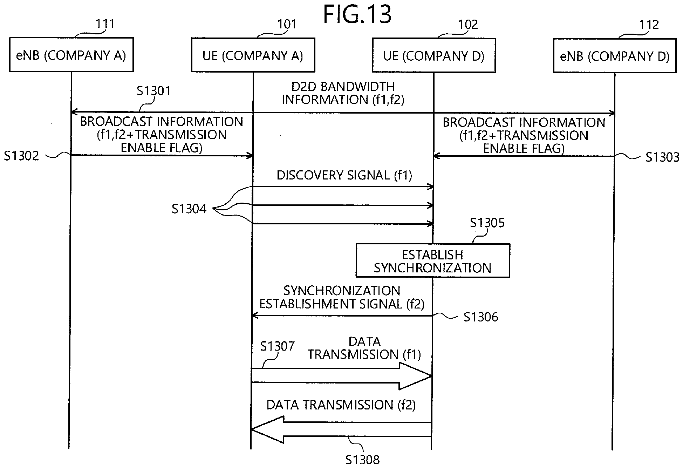

FIG. 13 is a sequence diagram of a modification example of operation in the wireless communications system according to the second embodiment. In the wireless communications system 100, for example, the steps depicted in FIG. 13 may be executed.

Steps S1301 to S1307 depicted in FIG. 13 are the same as steps S901 to S907 depicted in FIG. 9. However, in addition to the information indicating the frequency bandwidths f1, f2, the broadcast information transmitted at step S1303 further includes a transmission enable flag indicating that data transmission by D2D communication using the frequency bandwidth f2 is permitted. After steps S1301 to S1307, the UE 102 transitions to step S1308. Step S1308 is the same as step S1012 depicted in FIG. 10.

In this manner, by including the transmission enable flag in the broadcast information transmitted at step S1303, the transmission of a transmission enable request signal from the UE 102 to the eNB 112 and the transmission of a transmission enable signal from the eNB 112 to the UE 102 may be omitted.

In this case, at step S602 depicted in FIG. 6, the D2D bandwidth information and the transmission enable flag are transmitted together to the UE. Further, steps S603 and S604 may be omitted. Further, at step S1201 depicted in FIG. 12, the D2D bandwidth information and the transmission enable flag are received together. Further, steps S1207 to S1210 may be omitted.

In this manner, according to the second embodiment, similar to the first embodiment, D2D communication between the UEs 101, 102 of differing operators becomes possible. Further, the amount of signaling for D2D communication may be suppressed.

Further, by using the frequency bandwidth f1 of the operator (company A) of the UE 101 in data transmission by the UE 101, the management of radio resources for data transmission by D2D communication may be performed at the eNB 111 on the operator side of the UE 101. Further, by using the frequency bandwidth f2 of the operator (company D) of the UE 102 for data transmission by the UE 102, the management of radio resources for data transmission by D2D communication may be performed at the eNB 112 on the operator side of the UE 102. Therefore, scheduling and interference control for D2D communication are facilitated.

### (Third embodiment)

Concerning a third embodiment, parts differing from the second embodiment will be described. In the third embodiment, a case will be described where the frequency bandwidth f1 of the operator (company A) of the UE 101 is used in the data transmission and data reception by the UE 101.

### (Operation in wireless communications system according to third embodiment)

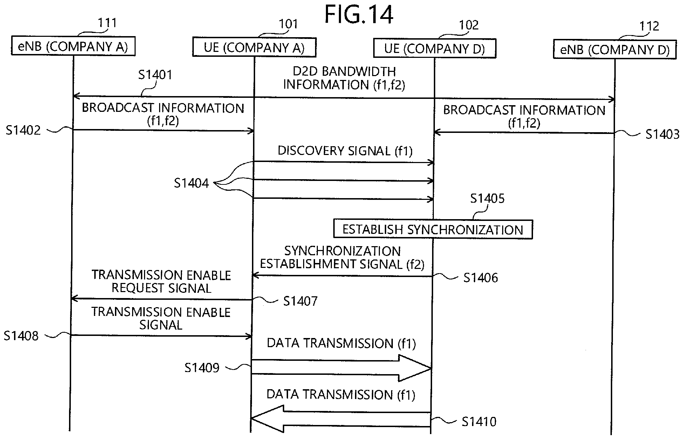

FIG. 14 is a sequence diagram depicting an example of operation in the wireless communications system according to the third embodiment. In the wireless communications system 100 according to the third embodiment, for example, the steps depicted in FIG. 14 are executed. Steps S1401 to S1409 depicted in FIG. 14 are the same as steps S301 to S309 depicted in FIG. 3. After step S1409, the UE 102 performs data transmission to the UE 101 by D2D communication using the frequency bandwidth f1 (step S1410).

In this manner, by using the frequency bandwidth f1 of the eNB 111 in data transmission from the UE 102 to the UE 101, the UE 102 is able to perform data transmission to the UE 101 without transmitting a transmission enable request signal to the eNB 112. In this case, for example, by the data transmission from the UE 101 at step S1409, the UE 102 is able to determine that permission for transmission by the frequency bandwidth f1 was granted.

Further, before the data transmission at step S1409, the UE 101 may use a control signal of the frequency bandwidth f1 to notify the UE 102 that permission for transmission by the frequency bandwidth f1 was granted. In this case, the data transmission at step S1410 may be performed ahead of the data transmission at step S1409. Further, in this case, the data transmissions at steps S1409 and S1410 may be performed concurrently.

### (Processing by UE on company A side according third embodiment)

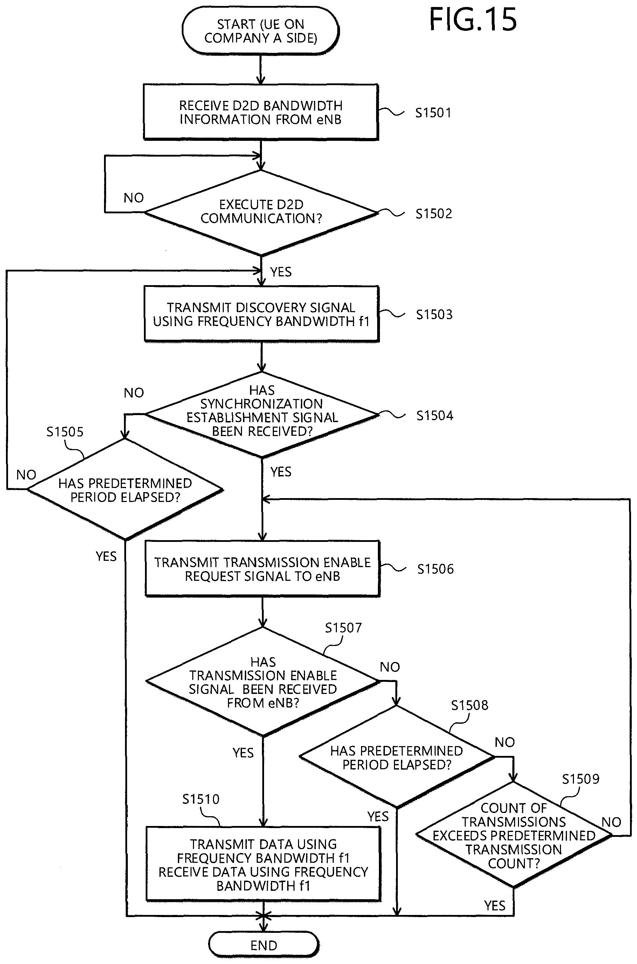

FIG. 15 is a flowchart of an example of processing by a UE on the company A according to the third embodiment. The UE 101 on the company A according to the third embodiment, for example, executes the steps depicted in FIG. 15. Steps S1501 to S1510 depicted in FIG. 15 are the same as steps S1101 to S1110 depicted in FIG. 11. However, at step S1510, the UE 101 transmits data to the UE 102 by the frequency bandwidth f1 and receives data from the UE 102 by the frequency bandwidth f1 (step S1510).

### (Processing by UE on company D according to third embodiment)

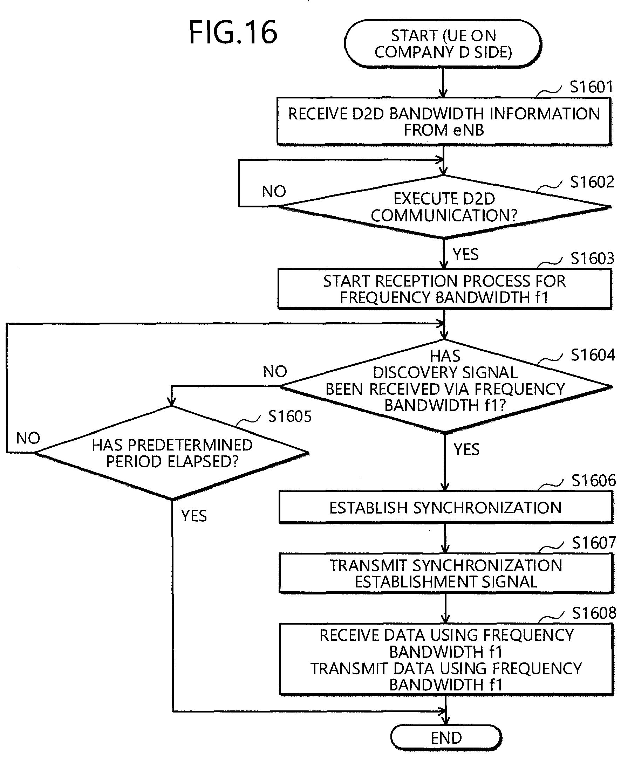

FIG. 16 is a flowchart of an example of processing by a UE on the company D side according to the third embodiment. The UE 102 on the company D side according to the third embodiment, for example, executes the steps depicted in FIG. 16. Steps S1601 to S1608 depicted in FIG. 16 are the same as steps S801 to S808 depicted in FIG. 8. However, at step S1608, the UE 102 receives data from the UE 101 by the frequency bandwidth f1 and transmits data to the UE 101 by the frequency bandwidth f1 (step S1608).

In this manner, according to the third embodiment, similar to the first embodiment, D2D communication between the UEs 101, 102 of differing operators becomes possible. Further, the amount of signaling for performing D2D communication may be suppressed.

Further, by using the frequency bandwidth f1 of the operator (company A) of the UE 101 in data transmission by the UE 101, the management of radio resources for data transmission by D2D communication may be performed at the eNB 111 on the operator side of the UE 101. Further, by using the frequency bandwidth f1 of another operator (company A) in data transmission by the UE 102, D2D communication becomes possible without the management of radio resources at the eNB 112.

### (Fourth embodiment)

Concerning a fourth embodiment, parts differing from the first embodiment will be described. In the fourth embodiment, a case will be described where the frequency bandwidth f2 of another operator (company D) is used in data transmission by the UE 101.

### (Operation in wireless communications system according to fourth embodiment)

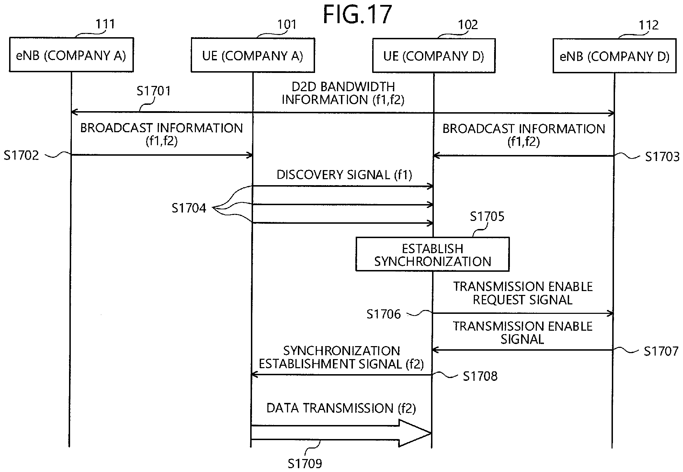

FIG. 17 is a sequence diagram depicting an example of operation in the wireless communications system according to the fourth embodiment. In the wireless communications system 100 according to the fourth embodiment, for example, the steps depicted in FIG. 17 are executed.

Steps S1701 to S1705 depicted in FIG. 17 are the same as step S301 to S305 depicted in FIG. 3. After step S1705, the UE 102 transmits to the eNB 112, a transmission enable request signal requesting permission for data transmission from the UE 101 to the UE 102 by D2D communication (step S1706). In the transmission of the transmission enable request signal at step S1706, for example, an uplink control channel assigned to the UE 102 by the eNB 112 may be used.

The eNB 112 transmits to the UE 102, a transmission enable signal permitting data transmission to the UE 102 by D2D communication (step S1707). In the transmission of the transmission enable signal at step S1707, for example, a downlink control channel assigned to the UE 102 by the eNB 112 may be used.

The UE 102 transmits a synchronization establishment signal to the UE 101 by the frequency bandwidth f2 that is within the bandwidth 202 of company D to which the UE 102 belongs and that can be used for D2D communication with another company (step S1708). The UE 101 performs data transmission to the UE 102 by D2D communication using the frequency bandwidth f2 (step S1709).

In this manner, by using the frequency bandwidth f2 of the eNB 112 in data transmission from the UE 101 to the UE 102, the UE 101 is able to perform data transmission to the UE 102 without transmitting a transmission enable request signal to the eNB 111. In this case, by the synchronization establishment signal from the UE 102 at step S1708, the UE 101 is able to determine that permission for transmission by the frequency bandwidth f2 was granted.

### (Processing by UE on company A side according to fourth embodiment)

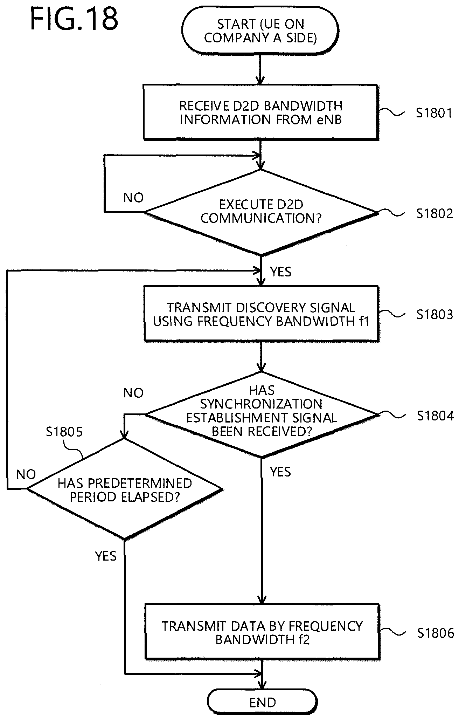

FIG. 18 is a flowchart of an example of processing by a UE on the company A side according to the fourth embodiment. The UE 101 on the company A side according to the fourth embodiment, for example, executes the steps depicted in FIG. 18. Steps S1801 to S1805 depicted in FIG. 18 are the same as steps S701 to S705 depicted in FIG. 7. As step S1804, if a synchronization establishment signal has been received (step S1804: YES), the UE 101 transmits data to the UE 102 by the frequency bandwidth f2, based on the D2D bandwidth information received at step S1801 (step S1806), and ends the series of operations.

### (Processing by UE on company D according to fourth embodiment)

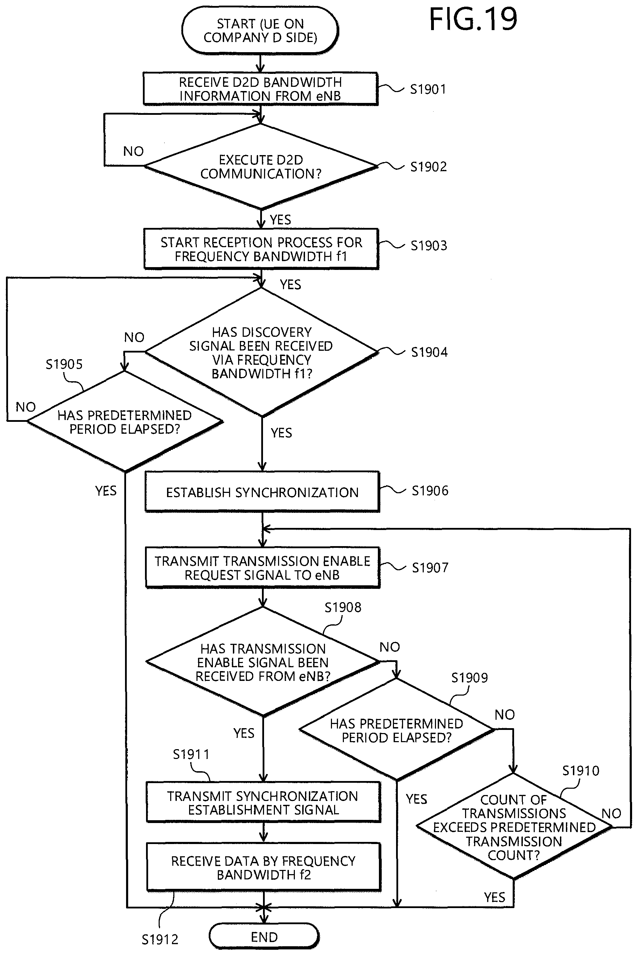

FIG. 19 is a flowchart of an example of processing by a UE on the company D side according to the fourth embodiment. The UE 102 on the company D side according to the fourth embodiment, for example, executes the steps depicted in FIG. 19. Steps S1901 to S1912 depicted in FIG. 19 are the same as steps S1201 to S1212 depicted in FIG. 12. However, at step S1912, the UE 102 receives data from the UE 101 by the frequency bandwidth f2 (step S1912).

In this manner, according to the fourth embodiment, similar to the first embodiment, D2D communication between the UEs 101, 102 of differing operators becomes possible. Further, the amount of signaling for performing D2D communication may be suppressed. Further, by using the frequency bandwidth f2 of another operator (company D) in data transmission by the UE 101, D2D communication becomes possible without management of radio resources at the eNB 111.

### (Fifth embodiment)

Concerning a fifth embodiment, parts differing from the first embodiment will be described. In the fifth embodiment, a case will be described where the frequency bandwidth f2 of another operator (company D) is used in data transmission by the UE 101 and the frequency bandwidth f1 of the operator (company A) of the UE 101 is used on data reception by the UE 101.

### (Operation in wireless communications system according to fifth embodiment)

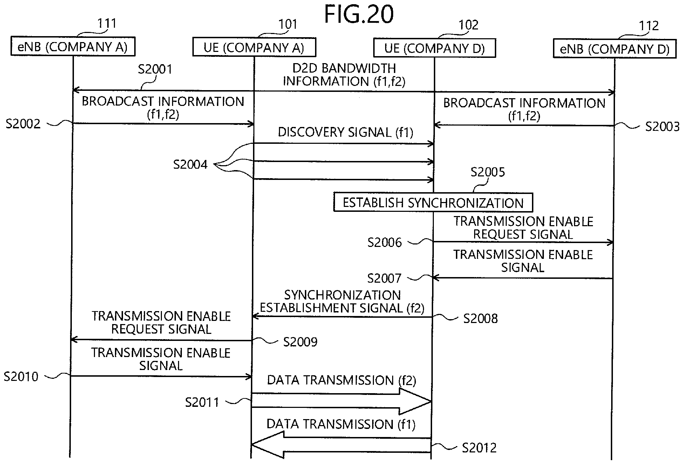

FIG. 20 is a sequence diagram depicting an example of operation in the wireless communications system according to the fifth embodiment. In the wireless communications system 100 according to the fifth embodiment, for example, the steps depicted in FIG. 20 are executed.

Steps S2001 to S2012 depicted in FIG. 20 are the same as steps S1001 to S1012 depicted in FIG. 10. However, at step S2011, the UE 101 performs data transmission to the UE 102 by D2D communication using the frequency bandwidth f2 (step S2011). Further, at step S2012, the UE 102 performs data transmission to the UE 101 by D2D communication using the frequency bandwidth f1 (step S2012).

### (Processing by UE on company A side according to fifth embodiment)

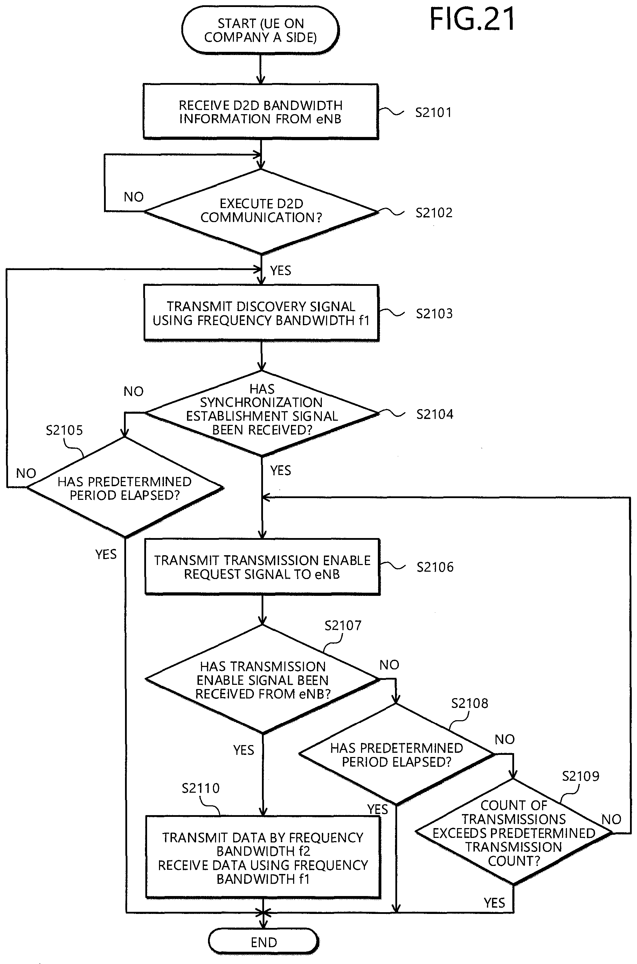

FIG. 21 is a flowchart of an example of processing by a UE on the company A side according to the fifth embodiment. The UE 101 on the company A side according to the fifth embodiment, for example, executes the steps depicted in FIG. 21. Steps S2101 to S2110 depicted in FIG. 21 are the same as steps S1101 to S1110 depicted in FIG. 11. However, at step S2110, the UE 101 transmits data to the UE 102 by the frequency bandwidth f2 and receives data from the UE 102 by the frequency bandwidth f1 (step S2110).

### (Processing by UE on company D side according to fifth embodiment)

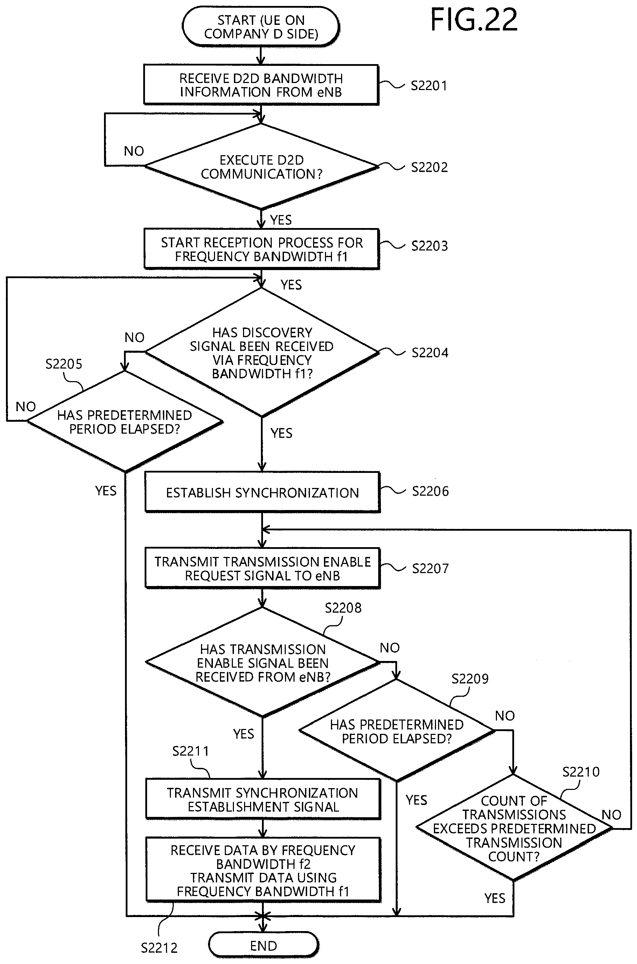

FIG. 22 is a flowchart of an example of processing by a UE on the company D side according to the fifth embodiment. The UE 102 on the company D side according to the fifth embodiment, for example, executes the steps depicted in FIG. 22. Steps S2201 to S2212 depicted in FIG. 22 are the same as steps S1201 to S1212 depicted in FIG. 12. However, at step S2212, the UE 102 receives data from the UE 101 by the frequency bandwidth f2 and transmits data to the UE 101 by the frequency bandwidth f1 (step S2212).

In this manner, according to the fifth embodiment, similar to the first embodiment, D2D communication between the UEs 101, 102 of differing operators becomes possible. Further, the amount of signaling for performing D2D communication may be suppressed.

### (Sixth embodiment)

Concerning a sixth embodiment, parts differing from the fourth embodiment will be described. In the sixth embodiment, a case will be described where the frequency bandwidth f2 of another operator (company D) is used in data transmission and data reception by the UE 101.

### (Operation in wireless communications system according to sixth embodiment)

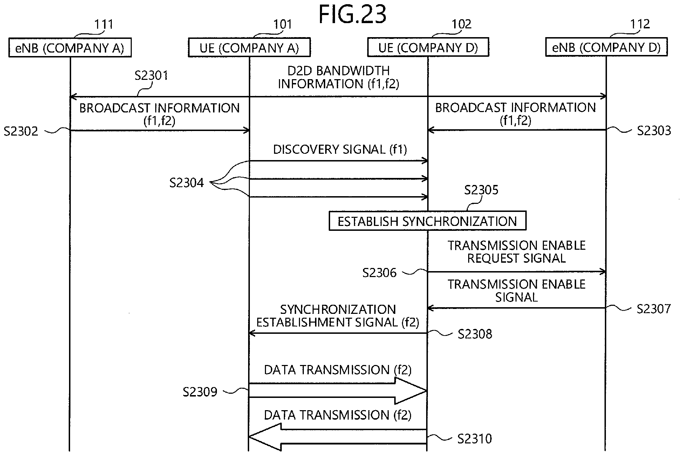

FIG. 23 is a sequence diagram depicting an example of operation in the wireless communications system according to the sixth embodiment. In the wireless communications system 100 according to the sixth embodiment, for example, the steps depicted in FIG. 23 are executed. Steps S2301 to S2309 depicted in FIG. 23 are the same as steps S1701 to S1709 depicted in FIG. 17. After step S2309, the UE 102 performs data transmission to the UE 101 by D2D communication using the frequency bandwidth f2 (step S2310).

In this manner, by using the frequency bandwidth f2 of the eNB 112 in data transmission from the UE 102 to the UE 101, data transmission to the UE 102 is possible without the UE 101 transmitting a transmission enable request signal to the eNB 111. In this case, by the synchronization establishment signal from the UE 102 at step S2308, the UE 101 is able to determine that permission for transmission by the frequency bandwidth f2 was granted.

### (Processing by UE on company A side according to sixth embodiment)

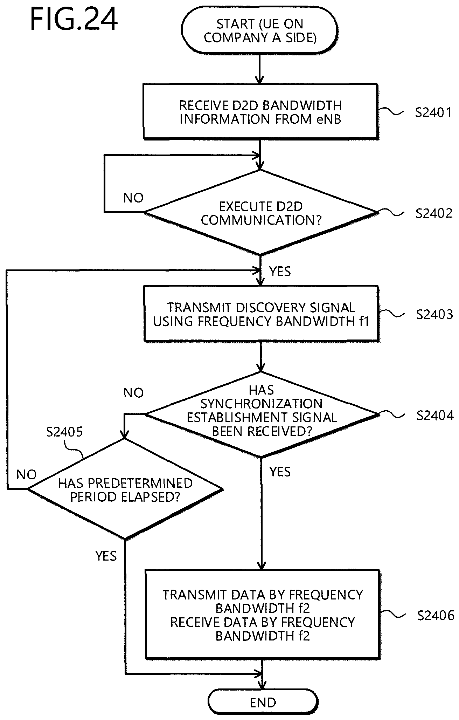

FIG. 24 is a flowchart of an example of processing by a UE on the company A side according to the sixth embodiment. The UE 101 on the company A side according to the sixth embodiment, for example, executes the steps depicted in FIG. 24. Steps S2401 to S2405 depicted in FIG. 24 are the same as steps S2101 to S2105 depicted in FIG. 21. However, at step S2404, if a synchronization establishment signal has been received (step S2404: YES), the UE 101 transmits data to the UE 102 by the frequency bandwidth f2 and receives data from the UE 102 by the frequency bandwidth f2 (step S2406).

### (Processing by UE on company D side according to sixth embodiment)

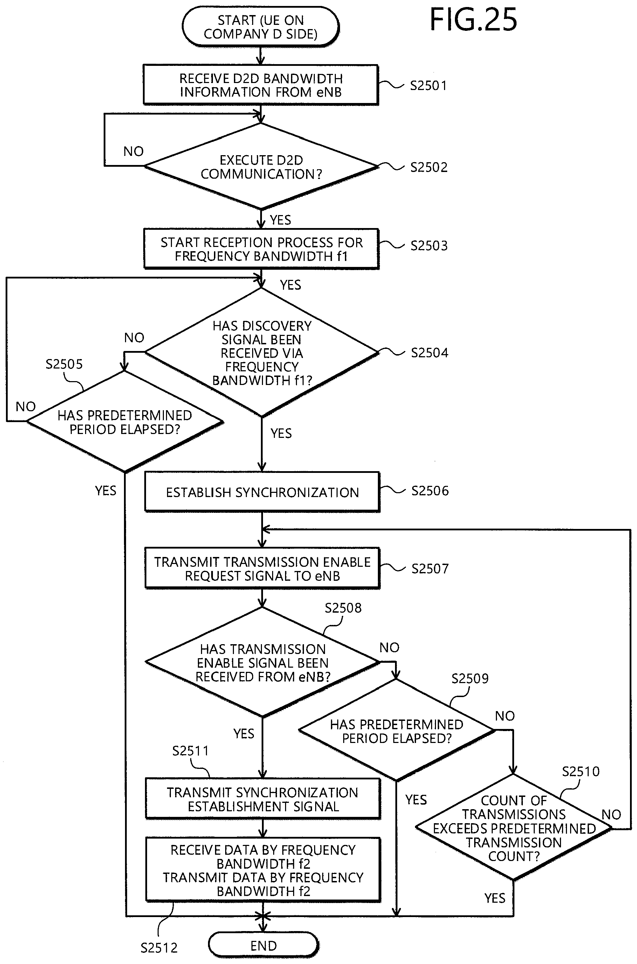

FIG. 25 is a flowchart of an example of processing by a UE on the company D side according to the sixth embodiment. The UE 102 on the company D side according to the sixth embodiment, for example, executes the steps depicted in FIG. 25. Steps S2501 to S2512 depicted in FIG. 25 are the same as steps S2201 to S2212 depicted in FIG. 22. As step S2512, the UE 102 receives data from the UE 101 by the frequency bandwidth f2 and transmits data to the UE 101 by the frequency bandwidth f2 (step S2512).

In this manner, according to the sixth embodiment, similar to the first embodiment, D2D communication between the UEs 101, 102 of differing operators becomes possible. Further, the amount of signaling for performing D2D communication may be suppressed. Further, by using the frequency bandwidth f2 of another operator (company D) in data transmission by the UE 101, D2D communication becomes possible without the management of radio resources at the eNB 111.

### (Seventh embodiment)

Concerning a seventh embodiment, parts differing from the embodiments described above will be described. In the embodiments described above, although examples of use of frequency bandwidth in data transmission by the UEs 101, 102 are described, these examples of frequency bandwidth use are applicable to the transmission of discovery signals and synchronization establishment signals by the UEs 101, 102.

### (Operation in wireless communications system according to seventh embodiment)

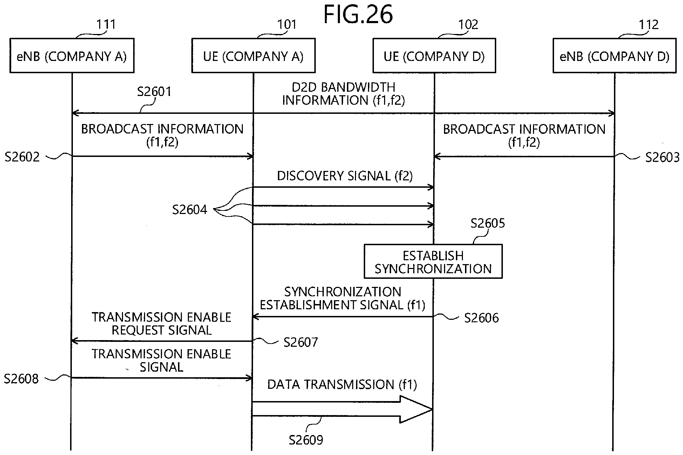

FIG. 26 is a sequence diagram depicting an example of operation in the wireless communications system according to the seventh embodiment. In the wireless communications system 100 according to the seventh embodiment, for example, the steps depicted in FIG. 26 are executed.

Steps S2601 to S2609 depicted in FIG. 26 are the same as steps S301 to S309 depicted in FIG. 3. However, at step S2604, the UE 101 transmits a discovery signal to the UE 102 by the frequency bandwidth f2 notified at step S2602 (step S2604). Further, at step S2606, the UE 102 uses the frequency bandwidth f1 notified at step S2603 and transmits to the UE 101, a synchronization establishment signal indicating establishment of synchronization (step S2606).

In this manner, in the transmission of the discovery signal by the UE 101, the frequency bandwidth f2 may be used without limitation to the frequency bandwidth f1. Further, in the transmission of the synchronization establishment signal by the UE 102, the frequency bandwidth f1 may be used without limitation to the frequency bandwidth f2. For example, the frequency bandwidth f1 may be used in both the transmission of the discovery signal and in the transmission of the synchronization establishment signal. Alternatively, the frequency bandwidth f2 may be used in both the transmission of the discovery signal and in the transmission of the synchronization establishment signal.

A modification example concerning these frequency bandwidths may be combined with the above embodiments and used. For example, in the first embodiment (FIG. 3, etc.), the frequency bandwidth f1 may be used in both the transmission of the discovery signal and in the transmission of the synchronization establishment signal. In this case, since the frequency bandwidth f2 is not used, the frequency bandwidth f2 needs not be configured at the eNB 112. Further, various notifications related to the frequency bandwidth f2 may be omitted.

In this manner, according to the seventh embodiment, similar to the first embodiment, D2D communication between the UEs 101, 102 of differing operators becomes possible. Further, the amount of signaling for performing D2D communication may be suppressed.

### (Eighth embodiment)

Concerning an eighth embodiment, part differing from the embodiments above will be described. In the embodiments above, a case where the eNB 111 receives D2D bandwidth information of the eNB 112 from the eNB 112 and broadcasts the frequency bandwidth f2 indicated in the received D2D bandwidth information to the UE 101 is described.

In contrast, the UE 101 may identify the frequency bandwidth f2 by using a band search or like to receive (intercept) the broadcast information transmitted from the eNB 112. Similarly, the UE 102 may identify the frequency bandwidth f1 by using a band search or the like to receive (intercept) broadcast information the transmitted from the eNB 111.

### (Operation in wireless communications system according to eighth embodiment)

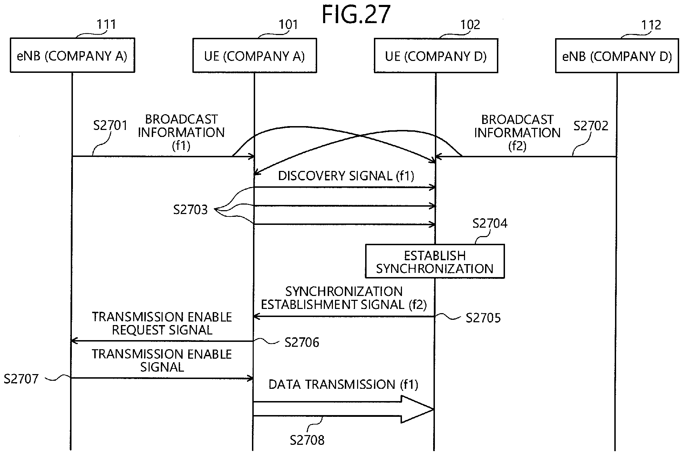

FIG. 27 is a sequence diagram depicting an example of operation in the wireless communications system according to the eighth embodiment. In the wireless communications system 100 according to the eighth embodiment, for example, the steps depicted in FIG. 27 are executed. Steps S2701 to S2708 depicted in FIG. 27 are the same as steps S302 to S309 depicted in FIG. 3.

However, at step S2701, the eNB 111 transmits to the UE 101, broadcast information that includes D2D bandwidth information indicating the frequency bandwidth f1 that is included in the bandwidth 201 of the eNB 111 and that can be used in D2D communication with another company (step S2701). The broadcast information described above such as SIB, etc. is information that can be received by a UE of a different operator and therefore, the UE 102 may intercept the broadcast information transmitted at step S2701 and identify the frequency bandwidth f1.

Further, at step S2702, the eNB 112 transmits to the UE 102, broadcast information that includes D2D bandwidth information indicating the frequency bandwidth f2 that is included in the bandwidth 202 of the eNB 112 and that can be used in D2D communication with another company (step S2702). The broadcast information described above such as SIB, etc., is information that can be received by a UE of a different operator and therefore, the UE 101 may intercept the broadcast information transmitted at step S2702 and identify the frequency bandwidth f2.

As a result, the eNB 111 (company A) and the eNB 112 (company D) may omit the process of exchanging D2D bandwidth information (for example, step S301 depicted in FIG. 3), enabling the amount of signaling between the eNBs 111, 112 to be reduced.

In this manner, according to the eighth embodiment, similar to the first embodiment, D2D communication between the UEs 101, 102 of differing operators becomes possible. Further, the amount of signaling for performing D2D communication may be suppressed.

Further, the UEs 101, 102 intercepting broadcast information transmitted from an eNB of another operator enables the eNBs 111, 112 to omit the process of exchanging D2D bandwidth information thereby enabling the amount of signaling between the eNBs 111, 112 to be reduced.

As described, the wireless communications system, the base station, the terminal, and the communications method enable direct communication between terminals of differing operators.

For example, although D2D communication is under consideration as one WI of the 3GPP release 12, neither a data communications method nor a link establishment method at a radio layer between terminals of differing operators is under consideration.

For example, even when UEs desiring to perform inter-device communication are near each other, if the operators to which the UEs are contracted differ, the UEs are connected to different eNBs and therefore, communicate through the network. As a result, the load on the network increases.

Further, for the UEs connected to eNBs to obtain the information of each other, signaling through the network is necessary. Therefore, the load on the network increases and the amount of signaling at the UEs also increases.

In contrast, according to the embodiments above, for example, within the bandwidths of the operators, a D2D bandwidth that can be used by UEs of other companies is prepared and can be broadcast. In response, the UEs of the operators use this D2D bandwidth, transmit and receive a discovery signal, establish synchronization, and perform data transmission.

As a result, D2D communication between UEs for which the operators differ becomes possible. Further, for example, for each execution of D2D communication, the amount of signaling for performing D2D communication may be suppressed compared to a method of transmitting and receiving information related to D2D bandwidth.

### EXPLANATIONS OF LETTERS OR NUMERALS

100 wireless communications system
101, 102 UE
111, 112, 400 eNB
120 network
201, 202 bandwidth
401, 501 reception antenna
402, 502 receiver
403, 503 L1 receiving unit
404, 504 higher layer processing unit
405, 505 L1 transmitting unit
406, 506 transmitter
407, 507 transmission antenna
408 broadcast information generating unit
409 transmission enable determining unit
430, 550 communications apparatus
431, 551 CPU
432, 552 memory
433, 554 wireless communications interface
434 wired communications interface
439, 559 bus
508 D2D bandwidth information obtaining unit
509 transmission enable configuring unit
510, 533 D2D signal configuring unit
531 discovery signal detecting unit
532 synchronization establishment signal configuring unit
553 user interface

## Claims

1. A wireless communications system comprising:
a first base station of a first operator;
a first terminal that wirelessly connects to the first base station;
a second base station of a second operator different from the first operator; and
a second terminal that wirelessly connects to a second base station, wherein
at least one of the first base station and the second base station transmits broadcast information that indicates a predetermined bandwidth that can be used in direct communication between first terminal and the second terminal, the predetermined bandwidth being included in a radio frequency bandwidth assigned to first operator, and
the second terminal, based on the broadcast information, uses the predetermined bandwidth and performs the direct communication with the first terminal.

2. The wireless communications system according to claim 1, wherein
the first terminal uses the predetermined bandwidth and transmits a radio signal to the second terminal, and
the second terminal receives based on the broadcast information, the radio signal transmitted using the predetermined bandwidth by the first terminal.

3. The wireless communications system according to claim 1, wherein
the second terminal, based on the broadcast information, uses the predetermined bandwidth and transmits a radio signal to the first terminal, and
the first terminal receives the radio signal transmitted using the predetermined bandwidth by the second terminal.

4. The wireless communications system according to claim 1, wherein
the first terminal uses the predetermined bandwidth and transmits a first radio signal to the second terminal,
the second terminal, based on the broadcast information, uses the predetermined bandwidth and transmits a second radio signal to the first terminal,
the second terminal receives based on the broadcast information, the first radio signal transmitted using the predetermined bandwidth by the first terminal, and
the first terminal receives the second radio signal transmitted using the predetermined bandwidth by the second terminal.

5. The wireless communications system according to claim 1, wherein
at least one of the first base station and the second base station, transmits first broadcast information that indicates a first bandwidth that can be used in the direction communication, the first bandwidth being included in the radio frequency bandwidth assigned to the first operator, and
the second terminal, based on the first broadcast information, uses the first bandwidth and performs the direct communication with the first terminal,
at least one of the first base station and the second base station, transmits second broadcast information that indicates a second bandwidth that can be used in the direct communication, the second bandwidth being included in a radio frequency bandwidth assigned to the second operator, and
the first terminal, based on the second broadcast information, uses the second bandwidth and performs the direct communication with the second terminal.

6. The wireless communications system according to claim 5, wherein
the first terminal uses the first bandwidth and transmits a first radio signal to the second terminal,
the second terminal uses the second bandwidth and transmits a second radio signal to the first terminal,
the first terminal receives based on the second broadcast information, the second radio signal transmitted using the second bandwidth by the second terminal, and
the second terminal receives based on the first broadcast information, the first radio signal transmitted using the first bandwidth by the first terminal.

7. The wireless communications system according to claim 5, wherein
the first terminal, based on the second broadcast information, uses the second bandwidth and transmits a first radio signal to the second terminal,
the second terminal, based on the first broadcast information, uses the first bandwidth and transmits a second radio signal to the first terminal,
the first terminal receives the second radio signal transmitted using the first bandwidth by the second terminal, and
the second terminal receives the first radio signal transmitted using the second bandwidth by the first terminal.

8. The wireless communications system according to claim 1, wherein
the first base station notifies the second base station of the predetermined bandwidth, and
the second base station transmits the broadcast information that indicates the predetermined bandwidth notified by the first base station.

9. The wireless communications system according to claim 1, wherein
the first base station transmits the broadcast information, and
the second terminal receives the broadcast information transmitted by the first base station and based on the received broadcast information, uses the predetermined bandwidth and performs the direct communication with the first terminal.

10. The wireless communications system according to claim 1, wherein
the broadcast information includes information indicating that data transmission by the direct communication is permitted.

11. A base station that is a first base station or a second base station of a communications system that includes the first base station of a first operator, a first terminal that wirelessly connects to the first base station, the second base station of a second operator different from the first operator, and a second terminal that wirelessly connects to the second base station, the base station comprising:
a transmitting unit configured to transmit broadcast information that can be received by the second terminal and that indicates a predetermined bandwidth that can be used in direct communication between the first terminal and the second terminal, the predetermined bandwidth being included in a radio frequency bandwidth assigned to the first operator.

12. A terminal that is a second terminal of a communications system that includes a first base station of a first operator, a first terminal that wirelessly connects to the first base station, a second base station of a second operator different from the first operator, and the second terminal that wirelessly connects to the second base station, the terminal comprising:
a receiving unit configured to receive broadcast information that is transmitted from one of the first base station and the second base station and indicates a predetermined bandwidth that can be used in direct communication between the first terminal and the second terminal, the predetermined bandwidth being included in a radio frequency bandwidth assigned to the first operator; and
a communications unit configured to use the predetermined bandwidth and perform the direct communication with the first terminal, based on the broadcast information received by the receiving unit.

13. A communications method by one of a first base station and a second base station of a communications system that includes the first base station of a first operator, a first terminal that wirelessly connects to the first base station, the second base station of a second operator different from the first operator, and a second terminal that wirelessly connects to the second base station, the communications method comprising:
transmitting broadcast information that can be received by the second terminal and that indicates a predetermined bandwidth that can be used in direct communication between the first terminal and the second terminal, the predetermined bandwidth being included in a radio frequency bandwidth assigned to the first operator.

14. A communications method by a second terminal of a communications system that includes a first base station of a first operator, a first terminal that wirelessly connects to the first base station, a second base station of a second operator different from the first operator, and the second terminal that wirelessly connects to the second base station, the communications method comprising:
receiving broadcast information that is transmitted from one of the first base station and the second base station and indicates a predetermined bandwidth that can be used in direct communication between the first terminal and the second terminal, the predetermined bandwidth being included in a radio frequency bandwidth assigned to the first operator; and
performing the direct communication with the first terminal using the predetermined bandwidth, based on the received broadcast information.
